# EUROPEAN PATENT APPLICATION

(11) **EP 4 113 745 A1**
(43) Date of publication of application: **04.01.2023**
(21) Application number: 22182042.6
(22) Date of filing: 29.06.2022
(51) Int. Cl.: H01Q 1/42, G01S 7/40, G01R 29/10, G01S 7/03

(54) **SIMPLIFIED RADOME MEASURING SYSTEMS AND METHODS**

(30) Priority: 30.06.2021 EP 21182937
(71) Applicant: Perisens GmbH, 85622 Feldkirchen (DE)
(72) Inventor: Dr. Pfeiffer, Florian, 85551 Kirchheim b. München (DE); Fünfer, Manuel, 85622 Feldkirchen (DE)
(74) Representative: Stellbrink & Partner Patentanwälte mbB

(57) **Abstract**

The present invention relates to a radome measuring system, comprising a data processing device (20) a first antenna (10a) and a second antenna (10b). The first antenna (10a) and the second antenna (10b) are configured to be connected with the data processing device (20) and to face each other on opposite sides of a measurement region (30). The data processing device (20) is configured to control the antennas (10a, 10b) to transmit a measurement signal (40) through the measurement region (30) and to receive at least one received portion (50a, 50b) of the measurement signal (40). Moreover, the data processing device (40) is configured to determine a property of a radome (15) placed in the measurement region (30) based on the at least one received portion (50a, 50b) of the measurement signal (40). The present invention also relates to a radome measuring method.

## Description

Radars are detection systems or sensors that use electromagnetic waves to determine range, angle or velocity of objects. A radar usually consists of a transmitting unit, or antenna, that radiates electromagnetic waves. The frequency of the emitted electromagnetic wave, or the operational frequency of the radar, can be within a wide range of the electromagnetic spectrum, usually within the radio and microwave part of the spectrum and depends on the use scenario of the radar. The lower the operational frequency of the radar the higher the detection range, as the transmitted electromagnetic waves are less attenuated or affected by external factors, e.g., by weather conditions, radar covers, etc. On the other hand, high frequencies offer a better accuracy and resolution of detection due to the smaller wavelength, but at the same time are highly susceptible to attenuation.

An emerging technology is the use of radar systems in automotive industry. More particularly, radars operating in high frequencies, such as, 20 to 160 GHz, usually between 70 and 90 GHz, can provide a very high range resolution and achievable accuracy. This feature makes such radars preferable for use in parking assistants, blind spot monitoring, brake assistant systems, etc. However, due to the very high operating frequency, such radar systems suffer from high signal attenuation.

A radar is usually set to operate in open-air conditions. Thus, the radar is exposed to different weather conditions, dust or other external particles and forces that may damage the radar and/or lower the accuracy of its measurements. In cars the radars are wanted to be covered for esthetic reasons so that they are not visible. To cope with this, a radome, also referred as a radar dome or radar cover, is implemented around the radar, hence protecting it against external factors and/or making it invisible.

The radome may negatively influence the operation of the radar. Due to dielectric characteristics of the radome material, the radome may cause unwanted reflections, attenuation, frequency shift, phase shift, beam deflection, beam broadening, sidelobe increase, etc. These side effects may introduce errors in the radar sensing. The unwanted effects caused by the radome, particularly attenuation, become significant when the radar operates in high frequencies. For example, the radars operating in high frequencies, usually used in automotive industry are highly susceptible to suffer from attenuation and other unwanted effects caused by the radome.

Thus, in one hand it is advantageous for various reasons (e.g., protection against weather conditions or external elements or forces and/or improving vehicle design) to cover the radar sensor with a radome, while on the other hand the radome introduces many unwanted effects (e.g., signal attenuation) that may increase the inaccuracy or decrease the detection or sensing capability of the radar.

Furthermore, the use of radar systems in vehicles, such as for parking assistance, blind spot monitoring, braking assistance, etc., are prone to strict requirements set by legal standards, such that maximum safety can be ensured for traffic participants. These standards or regulations usually require high detection accuracy.

Some attempts that tackle this issue are already present in the state of the art. They are mostly based on measurements with radar sensors, wherein radar test targets, usually reflectors, are positioned within a certain distance from the radar sensor and the reflection power is measured, with and without a radome. The difference between the two power values is used to quantify the attenuation caused by the radome.

For example, US 5,371,505A discloses a method for determining signal transmission characteristics for a selected area of a radome the method comprising the steps of radiating a test signal toward said selected area of said radome, reflecting said test signal from a predetermined first reflection position, after said test signal has passed through said selected area of said radome, to provide a reflected test signal, receiving said reflected test signal, storing data representative of said reflected test signal, repeating the above steps with said predetermined first reflection position changed to a predetermined second reflection position and processing said stored data to provide data representative of signal transmission characteristics for said selected area of said radome.

US 3,936,736A discloses a hand held universal radome tester which is an instrument for locating discontinuities and impurities inside a radome wall and for determining the quality of an anti-static paint coating over the exterior surface of a radome. It includes a microwave segment which is energized in the discontinuities/impurities mode of operation to measure energy reflected by the radome wall, and a dc segment which is energized in the anti-static paint tester mode to measure resistance in megohms per square. The tester is battery-operated making it a completely portable device.

The above-mentioned publications, as discussed, are based on indirect measurements via reflection measurement. However, reflection-based measurements of the radome dielectric properties may introduce measurement errors.

WO 2020/074667 A1, filed by the applicant, alleviates the above problems by providing radome measuring systems and methods that can perform transmission measurements.

However, the system described in WO 2020/074667 A1, despite several advantages described therein, can be cumbersome and difficult to handle.

Therefore, there is a need to improve the radome measurement system described in WO 2020/074667 A1 such that it can be less complex, lighter, more compact and/or handled. Such a system is provided by the present invention.

In light of the above, the present invention seeks to overcome or at least alleviate the shortcomings and disadvantages of the known implementations. It is an object of the present invention to provide an improved radome measuring system.

In particular, it can be an object of the present invention to provide a radome measurement system configured for manual use. It can be another object of the present invention to provide a cost-efficient radome measurement system. It can be another object of the present invention to provide a radome measurement system with a highly integrated technology, low hardware complexity, lightweight and/or robust. It can be another object of the present invention to provide a radome measurement system that can be easy to handle. It can be another object of the present invention to provide a radome measurement system with increased ergonomics. It can be another object of the present invention to provide a radome measurement system that can perform measurement in both automotive radar bands (i.e., the 77 and 79 GHz bands). It can be another object of the present invention to provide a radome measurement system with a low measurement time and that can allow real time measurements.

These objects are met by the radome measurement and the method of the present invention.

The terms "radome measurement system" and "radome measuring system" are used interchangeably.

In a first aspect, the present invention relates to a radome measuring system, comprising a data processing device a first antenna and a second antenna. The first antenna and the second antenna are configured to be connected with the data processing device and to face each other on opposite sides of a measurement region. The data processing device is configured to control the antennas to transmit a measurement signal through the measurement region and to receive at least one received portion of the measurement signal. Moreover, the data processing device is configured to determine a property of a radome placed in the measurement region based on the at least one received portion of the measurement signal.

In a second aspect, the present invention relates to a method comprising transmitting a measurement signal through a measurement region and receiving at least one received portion of the measurement signal and determining a property of a radome placed in the measurement region based on the at least one received portion of the measurement signal.

In some embodiments, the above system can be configured to carry out the above method.

In some embodiments, the radome measuring system can be configured for manual use. That is, the radome measuring system can be configured to be used by a human operator. Manual use may comprise, but not limited to, handling, guiding, switching on, switching off, starting a measurement, pausing a measurement and/or ending or stopping a measurement.

In some embodiments, the radome measuring system can be configured to be handled manually. That is, the radome measuring system can be configured to facilitate a human operator to handle it manually. For example, the radome measuring system can be configured to allow a human operator to ergonomically carry and/or change a position and/or change an orientation of the radome measuring system.

In some embodiments, the radome measuring system can comprise at least one ergonomic feature. The at least one ergonomic feature can refer to a feature of the radome measuring system that can facilitate manual handling of the radome measuring system. For example, one of the at least one ergonomic feature can be an ergonomic size, such as, an ergonomic height, ergonomic depth and/or ergonomic width. In other words, the radome measuring system can be appropriately sized to allow ergonomic handling. One of the at least one ergonomic feature can be a reduced weight. That is, the radome measuring system can comprise an appropriate weight to allow ergonomic handling.

In some embodiments, the radome measuring system can comprise a height of at least 20 cm and at most 150 cm. In some preferred embodiments the radome measuring system can comprise a height of at least 30 cm and at most 85 cm. For example, the radome measuring system can comprise a height of 83 cm. Therefore, the radome measuring system of the present invention can comprise a compact size and/or be ergonomic. Said heights, can be some exemplary ergonomic heights that the radome measuring system can comprise, i.e., heights that can allow for a manual handling of the radome measuring system.

In some embodiments, the radome measuring system can comprise a depth of at least 20 cm and at most 100 cm. In some preferred embodiments the radome measuring system can comprise a depth of at least 40 cm and at most 60 cm. For example, the radome measuring system can comprise a depth of 58 cm. Therefore, the radome measuring system of the present invention can comprise a compact size and/or be ergonomic. Said depths, can be some exemplary ergonomic depths that the radome measuring system can comprise, i.e., depths that can allow for a manual handling of the radome measuring system.

In some embodiments, the radome measuring system can comprise said height(s) and depth(s).

In some embodiments the radome measuring system can be configured such that a distance between the antennas can be at least 5 cm and at most 50 cm, preferably at least 15 cm and at most 30 cm, such as, 20 cm. Such a distance between the antennas can be particularly advantageous as it can allow the radome measuring system to comprise a compact size and/or be ergonomic.

In some embodiments the radome measuring system can comprise a main frame portion. For example, the main frame portion can comprise a longitudinal structure. The main frame portion can be configured to facilitate mounting of other elements of the radome measuring system. The main frame portion can be configured to support the weight of the other elements of the radome measuring system. Generally, the main frame portion can be configured to be rigid.

In some embodiments, the main frame portion can comprise a length of at least 20 cm and at most 150 cm, preferably at least 30 cm and at most 85 cm, such as, 80 cm. The length of the main portion can refer to the largest dimension of the main frame portion. Said length of the main portion can be advantageous as it can provide sufficient space for mounting thereon and/or therein other elements of the radome measuring system, while still allowing the radome measuring system to comprise a compact size and/or be ergonomic.

In some embodiments, the radome measuring system can comprise a supporting frame portion.

The supporting frame portion can be configured to allow the radome measuring system to stand on a surface, e.g., on a horizontal surface. Moreover, the supporting frame portion can increase robustness against the radome measuring system being (accidentally) knocked down.

For example, the supporting frame portion can comprise a longitudinal structure. This be particularly efficient for providing sufficient support, while still not making the radome measuring system bulky.

In some embodiments, the supporting frame portion can comprise a length of at least 20 cm and at most 100 cm, preferably at least 40 cm and at most 60 cm, such as, 50 cm. Said length of the supporting frame portion can be advantageous as it can provide sufficient support for the radome measuring system to stand on a surface, while still allowing the radome measuring system to comprise a compact size and/or be ergonomic.

The supporting frame portion and the main frame portion, in embodiments wherein both are provided, can be arranged (substantially) perpendicular to each other. Therefore, the supporting frame portion can stand or lie on a surface, e.g., a horizontal surface, and the main frame portion to stand (substantially) perpendicular with said surface.

In some embodiments, the radome measuring system can comprise a single arm configured to allow mounting at least one antenna thereon. In such embodiments, the single arm and the main frame portion can be attached to each other. That is, the single arm and the main frame portion can be fixedly attached to each other. In some embodiments, the single arm and the main portion can be formed by a single piece.

The single arm can be configured to allow the at least one antenna mounted thereon to face the main frame portion. That is, the single arm can be configured such that electromagnetic waves emitted by the at least one antenna mounted thereon can be directed towards the main frame portion.

In such embodiments, one of the antennas can be mounted on the single arm and the other of the antennas can be mounted on the main frame portion. This way, the antennas can face each other, i.e., can be within the line of sight of each other.

In some embodiments, the radome measuring system can comprise a first arm configured to allow mounting at least one antenna thereon and a second arm configured to allow mounting at least one antenna thereon, such that the at least one antenna mounted on the first arm can face the at least one antenna mounted on the second arm. For example, the first arm and the second arm can be provided facing each other.

In some embodiments the first arm and the second arm can be longitudinal. That is, the first arm and the second arm comprise one dimension which can be larger than the other two dimensions. Being longitudinal, the first arm and the second arm can facilitate providing the antennas at a distance from other parts of the radome measuring system (e.g., from the main frame portion, if present), while still allowing the radome measuring system to comprise a compact size and/or be ergonomic (due to the small other two dimensions). It will be understood, that providing the antennas at a distance from other parts of the radome measuring system can be advantageous as it can provide more flexibility in measuring radomes of different sizes.

In some embodiments, the first arm and the second arm can be parallel to each other. This can facilitate aligning the antennas mounted thereon with respect to each other.

The first arm and the second arm can comprise a length of at least 20 cm and at most 100 cm, preferably at least 40 cm and at most 60 cm, such as, 58 cm. Said lengths of the first and second arm can comprise an advantageous tradeoff between providing flexibility in measuring radomes of different sizes and allowing the radome measuring system to comprise a compact size and/or be ergonomic.

In embodiments wherein the main frame portion is provided, the first arm and the second arm can be attached to the main frame portion such that they protrude from the same side of the main frame portion. This way, the first arm and the second arm can face each other. In other words, the first arm, the main frame portion and the second arm can form a U-shaped structure.

The first antenna can be mounted on the first arm and the second antenna can be mounted on the second arm. Thus, the first antenna and the second antenna can face each other.

The first arm and the second arm can be positioned at a distance of at least 5 cm and at most 50 cm, preferably at least 15 cm and at most 30 cm, such as, 20 cm or 25 cm.

In some embodiments the radome measuring system can comprise an enclosure configured to enclose the data processing device. The enclosure can be advantageous as it can increase longevity and effectiveness of the data processing device.

The enclosure can be advantageous as it can protect the data processing device from physical damages. For example, the enclosure can protect the data processing device from being hit by external elements. For example, the enclosure can be rigid.

The enclosure can be advantageous as it can protect the data processing device from dust and/or water. For example, the enclosure can be configured to be dust resistant, dustproof, water resistant and/or waterproof.

The enclosure can be advantageous as it can isolate the data processing device against electromagnetic interference. For example, the enclosure can be configured as an electromagnetic shield.

In some embodiments, wherein the main frame portion can also be provided, the enclosure can be mounted on the main frame portion. In other words, both the data processing device with the enclosure can be mounted on the main frame portion. This can result in a compact radome measuring system.

The enclosure can be mounted on a portion of the main frame portion positioned between the first arm and the second arm. This can allow for a high utilization of the "mounting" space provided by the main frame portion.

The enclosure can comprise at least one electromagnetic wave absorbing material. This can be advantageous as it can decrease the reflectance of the enclosure. Thus, reflections created by the enclosure can comprise a negligible power. Therefore, reflections that may be created by the enclosure can comprise a negligible effect on the measurement performed by the radome measuring system.

The enclosure can comprise at least one electromagnetic wave reflecting material. This can be advantageous for configuring the enclosure as an electromagnetic shield of the data processing device, therefore decreasing interference (e.g., of the antennas) to the data processing device.

Preferably, the enclosure can comprise the at least one electromagnetic wave reflecting material covered with the at least one electromagnetic wave absorbing material. This can be advantageous for reducing the reflectance of the enclosure in reflecting signals emitted by the antennas, while still providing electromagnetic shielding of the data processing device.

In some embodiments, the radome measuring system can comprise a display. Herein the display can refer to an electronic display. Some non-limiting examples of the display can be liquid crystal display (LCD), light-emitting diode (LED) display, segment displays, plasma display panel (PDP) and e-ink display.

The display can be mounted on the main frame portion. This can result in a compact radome measuring system.

The display can be configured to be connected for data communication with the data processing device.

The display can be configured to display at least one output of the data processing device.

The display can be configured to display the property of the radome. This can be advantageous as it can allow an operator to promptly see the determined property of the radome. In particular, this can be advantageous in embodiments wherein an operator may be testing and/or classifying several radomes, as it can allow the operator to promptly evaluate and/or classify the radomes.

In some embodiments, the display can be configured to display an intermediate result computed while determining the property of the radome. Therefore, further information, e.g., in addition to the property of the radome, can be promptly provided to an operator.

The display can be configured to display a diagnostic message indicating an operational status of the radome measuring system. This can be advantageous as it can facilitate troubleshooting the radome measuring system. Additionally or alternatively, it can make it easier for an operator to operate the radome measuring system. Additionally or alternatively, in such embodiments the display can facilitate notifying an operator if the radome measuring system comprises an error. As such, a more accurate utilization of the radome measuring system can be achieved.

For example, the diagnostic message may indicate whether the radome measuring system is on or off. Alternatively or additionally, the diagnostic message may indicate whether the radome measuring system is measuring. Alternatively or additionally, the diagnostic message may indicate a lack of a radome to be measured. For example, in case an operator forgets to provide a radome in the measurement region. Alternatively or additionally, the display may indicate a wrongfully positioned radome. Alternatively or additionally, the display may indicate an instruction to perform a reference measurement.

In some embodiments, the display can be configured to display a log message indicating an operation being carried out by the radome measuring system. For example, the log message may indicate a measuring phase of the radome measuring system. Alternatively or additionally, the log message may comprise a progress indicator of a measurement being performed by the radome measuring system. For example, the log message may comprise a progress bar.

In some embodiments, the radome measuring system can comprise a radome supporting element configured to support the radome during a measurement. That is, a radome can be placed in the measurement region by placing it on the radome supporting element.

The radome supporting element can be configured to facilitate positioning and holding the radome in the measurement region.

The radome supporting element can be configured to be substantially transparent to electromagnetic waves.

In some embodiments, the radome measuring system can comprise a focusing element. The focusing element can comprise a blocking portion and an aperture portion. The focusing element can be advantageous to measure a predetermined region of the radome. In particular the focusing element can allow the measuring signal to become incident on a predetermined region of the radome. More particularly, the focusing element can allow defining a target area on the radome and measuring that particular target area.

The aperture portion can be realized as a hole or opening on the focusing material. That is, the aperture can be realized as a hole or opening on the focusing element.

In some embodiments, the aperture portion can comprise a different material than the blocking portion. This can allow configuring the aperture portion to be substantially transparent to electromagnetic waves and the blocking portion to be substantially non-transparent to electromagnetic waves.

In some embodiments, the aperture portion can be configured to be substantially transparent to electromagnetic waves.

In some embodiments, the blocking portion can be configured to attenuate electromagnetic waves traversing through the blocking portion.

In some embodiments, the blocking portion can comprise at least one electromagnetic wave absorbing material. Alternatively or additionally, the blocking portion can be made of at least one electromagnetic wave absorbing material. This can be advantageous as it can decrease the reflectance of the blocking portion. Thus, reflections created by the blocking portion can comprise a negligible power. Therefore, reflections that may be created by the blocking portion can comprise a negligible effect on the measurement performed by the radome measuring system.

In some embodiments, the blocking portion can comprise at least one electromagnetic wave reflecting material. Alternatively or additionally, the blocking portion can be made of at least one electromagnetic wave reflecting material. This can be advantageous as it can significantly reduce the power of electromagnetic waves that can be transmitted through the blocking portion.

Preferably, the blocking portion can comprise or can be made of the at least one electromagnetic wave reflecting material covered by the at least one electromagnetic absorbing material. This can be advantageous for reducing the reflectance of the blocking portion in reflecting signals emitted by the antennas, while still significantly reducing the power of electromagnetic waves that can be transmitted through the blocking portion.

In some embodiments, the blocking portion can be configured to attenuate electromagnetic waves traversing through the blocking portion by at least 10dB.

In some embodiments, the aperture portion can comprise an area of at least 75 mm2 and at most 750 mm2, preferably at least 100 mm2 and at most 300 mm2, such as 255 mm2.

The aperture portion can comprise a circular shape.

The aperture portion can comprise an elliptic shape.

The aperture portion can comprise a square shape.

The radome measuring system can comprise a measurement initiating interface configured to receive an initiating command from a user and to provide the initiating command to the data processing device. The initiating command can for example be a command for starting the radome measurement.

The measurement initiating interface can be configured to be driven by a foot of the user. For example, the measurement initiating interface can be a button connected via a wire and/or wirelessly with the data processing device. This can provide for an ergonomic operation of the radome measuring system. In particular, this can be advantageous when the user can be manually handling a radome. Alternatively or additionally, this can be advantageous as it can reduce the likelihood of generating a relative motion between the antennas and the radome while providing the initiating command.

The radome measuring system further can comprise at least one antenna channel, each configured to connect the data processing device with one of the antennas.

Each antenna channel can be configured to convey microwave-frequency signals.

Each antenna channel can be configured to convey electromagnetic waves with a frequency between 30 GHz to 160 GHz.

Each antenna channel can be configured to convey electromagnetic waves with a frequency between 20 GHz to 160 GHz.

Each antenna channel can be configured to convey electromagnetic waves with a frequency between 70 GHz to 90 GHz.

Throughout the description the terms "each antenna channel", "each of the antenna channels" and "each one of the antenna channels" are used interchangeably.

Each antenna channel can comprise a respective microstrip portion. This can allow the antenna channel to be integrated into a printed circuit board. A detailed description of a microstrip is not provided herein, for the sake of brevity. A detailed description of a microstrip is provided in the following Wikipedia article: https://en.wikipedia.org/wiki/Microstrip.

Each one of the microstrip portions can be directly connected with the data processing device.

Each one of the antenna channels further can comprise a respective external portion. Each external portion can be advantageous as it can facilitate connecting an antenna thereon.

For example, each external portion can comprise a respective waveguide and/or a respective coaxial cable.

Each of the antenna channels can comprise a respective connector configured to connect the respective microstrip portion with the respective external portion.

Each connector can be a microstrip-to-waveguide connector configured to allow an electromagnetic wave transition from the respective microstrip portion to the respective waveguide and/or a microstrip-to-coaxial cable connector configured to allow an electromagnetic wave transition from the respective microstrip portion to the respective coaxial cable.

Each antenna channel can be configured to allow the measuring signal to traverse from the data processing device to the respective microstrip portion, and from the respective microstrip portion to the external portion and from the external portion to the respective antenna and/or to allow the measuring signal to traverse in reverse to the above.

The radome measuring system can comprise a first antenna channel configured to connect the data processing device with the first antenna and a second antenna channel configured to connect the data processing device with the second antenna. The first and the second antenna channel can comprise any of the features discussed with respect to the at least one antenna channel.

The external portion of the first antenna channel can be provided, at least in part, in the first arm and the external portion of the second antenna channel can be provided, at least in part, in the second arm. This way, the first arm and the second arm can protect the first and the second antenna channel Moreover, such a configuration can result in a compact radome measuring system.

The radome measuring system can comprise a radar unit and wherein the radar unit can comprise the data processing device. For example, the radar unit can comprise embedded therein the data processing device. This can provide a highly integrated or embedded solution therefore allowing the radome measuring system to comprise a compact size.

The radar unit comprising the data processing device can be optimized for radar signal processing. For example, in such embodiments the data processing device can be a radar chip. For example, in such embodiments the data processing device can comprise at least one accelerator configured particularly for radar signal processing. The at least one accelerator can for example be any of an accelerated processing unit (APU), an application specific integrated circuit (ASIC), application specific instruction set processor (ASIP), field programmable gate array (FPGA), artificial intelligence (AI) accelerator and tensor core.

The radar unit can be configured to allow mounting at least one of the antennas directly on the radar. For example, the radar unit can comprise a printed-circuit-board (PCB) and can be configured to allow mounting at least one of the antennas directly on the PCB.

The use of a radar unit can be advantageous for reducing the complexity and the cost of the radome measuring system. Moreover, radar units can be pre-configured to perform radar signal processing which can allow a suppression of unwanted reflections inside the system (with the separation in range).

Due to the integration features provided by the radar unit, the size of the radome measuring system can be reduced. This can lead to a lower weight of the measuring system. As a result, guidance by hand can be possible.

The radar unit can be a radar-on-chip.

The radar unit can comprise a printed-circuit-board (PCB) and wherein the data processing device can be electrically connected to the PCB of the radar unit.

Each antenna channel can be embedded at least in part in the radar unit. The part of each antenna channel embedded in the radar unit can be the microstrip portion of the antenna channel.

For example, each antenna channel can be embedded at least in part on the PCB of the radar unit. In particular, each microstrip portion can be embedded in the PCB of the radar unit.

Each connector can be mechanically fastened to the PCB and electrically connected to a respective microstrip portion.

The measurement signal can be an electromagnetic wave.

In general, throughout the description the terms "signal" and "electromagnetic wave" can be used interchangeably.

The measurement signal can comprise a frequency between 30 GHz to 160 GHz.

The measurement signal can comprise a frequency between 20 GHz to 160 GHz.

The measurement signal can comprise a frequency between 70 GHz to 90 GHz.

The above ranges can be particularly advantageous for measuring radomes used in the automotive industries.

The measurement signal can be a modulated signal. This can be advantageous as it can allow multiple tones (i.e., single frequency signals) to be transmitted simultaneously.

The first antenna and the second antenna can be aligned such that a main lobe of the first antenna and a main lobe of the second antenna intersect. Preferably, first antenna and the second antenna can be aligned such that their respective boresights and/or their axis of symmetry can coincide with each other. This can allow a signal emitted by one of the antennas, such as, the measurement signal, to be received by the other one.

The antennas can be arranged such that the first antenna can face a first side of the radome placed in the measurement region and the second antenna can face a second side, of the radome placed in the measurement region, wherein the first and the second side of the radome are opposite to each other.

The property can be indicative of a dielectric property of the radome. The dielectric property of the radome can indicate an effect that the radome can have on electromagnetic radiation. The dielectric property can indicate how the radome can store and/or dissipate electric energy and/or magnetic energy. The dielectric property can depend on the material or materials of the radome and/or on the structure of the radome. For example, the dielectric property can depend on the number of layers the radome can have, on the thickness of the one or more layers the radome can have, on the material(s) of the one or more layers the radome can have and/or on the positioning of the layers relative to each other. It will be understood, that the above is not an exhaustive list and that the dielectric property can depend on other characteristics of the radome as well.

As the radome can be intended to be used for covering radars, it can thus intercept radar signals. Therefore, determining at least one dielectric property can be advantageous for determining an effect that the radome can have on the radar signals.

The property can be indicative of a scattering parameter of the radome. The scattering parameter can be an example of the dielectric property.

The property can be indicative of an attenuation that the radome can cause to the measurement signal. The attenuation can be indicative of a reduction in power that the radome can cause to an electromagnetic wave traversing through the radome.

The property can be indicative of a one-way attenuation that the radome can cause to the measurement signal. The one-way attenuation can be indicative of a reduction in power that the radome can cause to an electromagnetic wave traversing through the radome from one side of the radome to the other. The one-way attenuation can therefore depend on the direction that the electromagnetic wave traverses through the radome.

The property can be indicative of a phase change that the radome can cause to the measurement signal.

In some embodiments, the property can comprise a transmission property of the radome. The transmission property can describe an amplitude, intensity, or total power of a transmitted wave through the radome relative to an incident wave on the radome. The transmission property can additionally or alternatively describe a phase shift between a transmitted wave through the radome relative to an incident wave on the radome. For example, the transmission property can be a complex transmission property, e.g., can comprise a complex number. That is, the transmission property can indicate all of the above.

For example, the transmission property can be a transmission coefficient of the radome.

The at least one received portion of the measurement signal can comprise a transmitted portion of the measurement signal that can be transmitted through the radome. That is, the part of the measurement signal that traverses through the radome can be referred to as the transmitted portion of the measurement signal. In other words, the measurement signal can become incident on a first side of the radome and a part thereof can exit from the other side. Said part can be referred to as the transmitted portion of the measurement signal. The transmitted portion of the measurement signal can depend on the transmission property.

The data processing device can be configured to determine the transmission property based on the transmitted portion of the measurement signal.

The data processing device can be configured to determine the transmission property based on an amplitude of the transmitted portion.

The data processing device can be configured to determine the transmission property based on a comparison of the amplitude of the transmitted portion and an amplitude of the measurement signal as transmitted. Said amplitudes can be complex amplitudes indicative of a real amplitude or power of the respective signal and of a phase of the respective signal.

In general, unless otherwise specified by the context, the term amplitude can refer to a complex amplitude.

The data processing device can be configured to determine the transmission property based on a ratio of the amplitude of the transmitted portion over an amplitude of the measurement signal as transmitted.

The radome measuring system can be configured to perform a transmission measurement and the data processing device can be configured to determine the transmission property based on the transmission measurement.

The data processing device can be configured to control the first antenna to transmit the measurement signal through the measurement region and to control the second antenna to receive the at least one transmitted portion of the measurement signal to perform the transmission measurement. This way the measurement signal can be transmitted from the first antenna, through the measurement region, to the second antenna.

Alternatively or additionally, the data processing device can be configured to control the second antenna to transmit the measurement signal through the measurement region and the first antenna to receive the at least one transmitted portion of the measurement signal to perform the transmission measurement. This way the measurement signal can be transmitted from the second antenna, through the measurement region, to the first antenna.

This way the property of the radome can be determined for either side of the radome.

The property can comprise a reflection property of the radome. The reflection property can describe an amplitude, intensity, or total power of a wave reflected by a surface of the radome relative to an incident wave on said surface of the radome. The reflection property can additionally or alternatively describe a phase shift between a wave reflected by a surface of the radome relative to an incident wave on said surface of the radome. For example, the reflection property can be a complex reflection property, e.g., can comprise a complex number. That is, the reflection property can indicate all of the above.

For example, the reflection property can be a reflection coefficient of the radome.

The at least one received portion of the measurement signal can comprise a reflected portion of the measurement signal reflected by the radome. The reflected portion can refer to parts (or copies) of the measurement signal that can be reflected at least once by a surface of the radome. These can also be referred to as reflections. As it will be understood, there can be several reflections of the measurement signal that can be created. These reflections can be grouped depending on the path that they follow before being received by at least one of the antennas.

Put simply, the received portion of the measurement signal can be a superposition of the transmitted portion and of reflections of the measurement signal.

Moreover, the reflected portion of the measurement signal can depend, inter alia, on a reflection property of the radome.

The data processing device can be configured to determine the reflection property based on the reflected portion.

The data processing device can be configured to determine the reflection property based on an amplitude of the reflected portion. Said amplitude can be a complex amplitude indicative of a real amplitude or power of the reflected portion and of a phase of the reflected portion.

The data processing device can be configured to determine the reflection property based on a comparison of the amplitude of the reflected portion and an amplitude of the measurement signal as transmitted.

The data processing device can be configured to determine the reflection property based on a ratio of the amplitude of the reflected portion over an amplitude of the measurement signal as transmitted.

The radome measuring system can be configured to perform a reflection measurement and the data processing device can be configured to determine the reflection property based on the reflection measurement.

The radar unit and the first antenna can be configured to be operable as a monostatic radar. For example, the first antenna can be operated as a transceiver. This can be advantageous for performing the reflection measurement as the first antenna can be used to transmit the measurement signal and receive reflections created by the radome when the measurement signal becomes incident on the radome.

That is, in some embodiments, the first antenna can be configured as a transceiver.

The radar unit can comprise a signal coupler and the first antenna can be coupled to a transmission line and to a receiving line of the radar unit via the coupler. The transmission line can be used to facilitate transmitting via the first antenna the measurement signal and the receiving line can be used to facilitate receiving via the first antenna electromagnetic waves.

The coupler can be a rat race coupler.

The data processing device can be configured to control the first antenna to transmit the measurement signal through the measurement region and to receive the at least one reflected portion of the measurement signal to perform the reflection measurement.

The system can comprise a plurality of first antennas and the radar unit and the plurality of the first antennas are configured to be operable as a bistatic or multistatic radar. That is, one or more of the first antennas can be used a transmitter and the other first antenna(s) can be used as a receiver.

For example, one first antenna can be configured as a transmitter antenna and another first antenna can be configured as a receiver antenna.

The data processing device can be configured to control the first antenna configured as a transmitter antenna to transmit the measurement signal through the measurement region and the first antenna configured as a receiver antenna to receive the at least one reflected portion of the measurement signal.

The data processing device can be configured to determine the property of the radome further based on at least one reference. This can for example comprise comparing a measured absolute property of the radome with a reference. This way a divergence between the radome and a reference sample can be determined. This can be advantageous for reducing errors that can be introduced into the measurement due to the environment and/or due to the radome measuring system. This can be particularly the case if the at least one reference is obtained on the same environment and/or with the same radome measuring system that the radome is measured.

The system can be configured to perform a reference measurement and the data processing device can be configured to determine the at least one reference based on the reference measurement.

The data processing device can be configured to control the antennas to transmit a reference measurement signal through the measurement region and to receive at least one reference received portion of the reference measurement signal. Moreover, the data processing device can be configured to determine the at least one reference based on the at least one reference received portion of the reference measurement signal.

The data processing device can be configured to determine the property based on a comparison of the at least one received portion of the measurement signal with the at least one reference.

The data processing device can be configured to determine the property of the radome further based on a comparison of the at least one reference received portion with the at least one received portion.

The data processing device can be configured to control the antennas to transmit the reference measurement signal identical to the measurement signal.

The reference measurement signal can be different from the measurement signal and the data processing device can be configure to determine the property of the radome further based on a comparison of the reference measurement signal with the measurement signal.

The data processing device can be configured to perform a reference measurement with an empty measurement region to obtain at least one empty reference. That is, there can be no external element positioned in the measurement region. For example, the measurement region can be a space filled with air. The at least one empty reference can be particularly advantageous for compensating for effects that the environment can have on the measurement signal. These effects can be due to the temperature of the environment, temperature of the radome measuring system or of elements thereof, amount of dust in the measurement region and path loss caused by the distance between the first and the second antenna.

The data processing device can be configured to perform a reference measurement with a reference sample in the measurement region to obtain at least one sampled reference. This can be particularly advantageous for determining effects caused by the reflectivity of surfaces comprised by the radome measuring system and/or the environment wherein the radome measuring system is positioned.

The reference sample can be a sample with known properties.

In some embodiments, the reference sample can be a sample that is suitable for the intended use of the radome. That is, the properties of the sample may not be explicitly known, however it can be known that the sample is suitable for the intended use of the radome.

The reference sample can comprise a reflective material, such as, a highly reflective material.

The reference sample can be a metal plate.

In some embodiments, the radome measuring system can comprise at least one distance sensor configured to measure a distance between the distance sensors and the radome placed in the measurement region.

The data processing device can be configured to determine a position of the radome in the measurement region based on the output of the at least one distance sensors.

For example, the data processing device can be configured to determine, inter alia, a distance between the first antenna and the radome and/or a distance between the second antenna and the radome.

The radome measuring system can comprise a plurality of distance sensors. In such embodiments, the data processing device can be configured to determine a tilt of the radome based on the output of the distance sensors. For example, the data processing device can be configured to determine an angle between a line perpendicular with a surface of the radome and a line of sight between the first antenna and the second antenna.

The tilt of the radome can be an angle which can be a deterministic function of an incidence angle of the measurement signal on the radome.

The at least one distance sensor can be advantageous as it can used to provide prompt feedback (e.g., via the display) to an operator whether the radome is positioned and/or oriented correctly in the measurement region.

The at least one distance sensor can be a laser-based distance sensor.

Preferably all the distance sensors are laser-based distance sensor.

The at least one laser-based distance sensors can be configured to emit visible light to measure the distance. This can be advantageous as it can allow an operator to see where the distance sensors are measuring or pointing at.

The at least one laser-based distance sensor that can be configured to emit visible light, can be further configured such that the emitted visible light when incident on the radome placed in the measurement region indicates a measurement area of the radome whereon the measurement signal can be incident.

Put simply, the at least one laser-based distance sensor can indicate a measurement area of the radome whereon the measurement signal can be incident. This can allow the operator to see which area of the radome is or will be measured.

The at least one distance sensor can be placed on one of the opposite sides of the measurement region wherein the antennas are positioned.

The at least one distance sensor can be positioned such that it faces the measurement region. This way the distance sensors can measure a distance to the radome positioned in the measurement region.

The relative position between the distance sensors can be known. This can facilitate determining a pose (i.e., position and orientation) of the radome in the measurement region.

The distance sensors can be fixed.

The radome measuring system can comprise at least two distance sensors.

The radome measuring system can comprise at least three distance sensors.

The data processing device can be configured to determine the property of the radome further based on the output of the distance sensors.

The data processing device can be configured to perform compensating calculations if the measured distance and/or tilt of the radome deviate from a target distance and/or tilt, to determine the property of the radome.

The radome measuring system can comprise an output device.

The output device can be configured to output an indication whether a required distance and/or tilt of the radome is maintained.

The output device can be configured to output an indication whether the radome is provided in the measurement region with a predetermined position and/or orientation.

The output device can be configured to output a measured distance of the radome.

The output device can be configured to output a measured tilt of the radome.

The output device can be configured to output a measured orientation of the radome.

The output device can be configured to output the determined property of the radome.

The output device can comprise the display.

The radome measuring system can comprise a frame configured to allow mounting therein the radar unit and the second antenna. The frame can be advantageous as it can provide a supporting or mounting structure for the other elements of the radome measuring system.

The frame can be U-shaped. That is, the frame can be shaped like a clamp. This can be advantageous as it can facilitate aligning the first antenna and the second antenna such that they can face each other on opposite sides of a measurement region.

The frame can comprise a solid material. This can be advantageous for providing sufficient support for the other elements of the radome measuring system. Additionally, this can reduce the likelihood that a relative position, e.g., a distance, between the antennas can be changed.

Maintaining the alignment between the antennas can be advantageous for maintaining an effective and accurate operation of the radome measuring system.

An outer surface of the frame facing the measurement region can be coated with a radiation-absorbent coating. This can reduce the number of reflections that can be created. This can be particularly advantageous if a transmission measurement is performed.

The radiation absorbent coating can be made of a radiation-absorbent material.

The radiation-absorbent coating can comprise arrays of protrusion pieces.

The protrusion pieces can be pyramid shaped.

In some embodiments, the frame can comprise a handle. This can facilitate an ergonomic operation of the radome measuring system. In particular, it can allow for an easy handling of the radome measuring system.

The output device can be mounted on the frame. This can allow the radome measuring system to promptly (e.g., in live time) provide information to an operator.

The frame can comprise the main frame portion.

The frame can comprise the supporting frame portion.

The frame can comprise the single arm.

The frame can comprise the first arm and the second arm.

The first antenna can be an embedded antenna. For example, the embedded antenna can be a conductor embedded in a dielectric material.

The first antenna can be embedded on the PCB of the radar unit.

The first antenna can be an on-chip integrated antenna.

The first antenna can be a planar antenna. For example, the planar antenna can be a patch antenna. For an exemplary description of such antennas see: https://en.wikipedia.org/wiki/Patch_antenna.

Said antennas, can be advantageous as they may allow for a compact radome measuring system.

The first antenna can be a waveguide antenna.

The radome measuring system can comprise a battery configured to provide electrical energy to the radome measuring system components. This can allow portable operation of the radome measuring system, as there can be no need to be near a power socket.

The radome measuring system can be a portable device for determining the property of the radome.

Determining a property of the radome can comprise determining a dielectric property of the radome, a scattering parameter of the radome, an attenuation that the radome causes to the measurement signal, a one-way attenuation that the radome causes to the measurement signal, a frequency change that the radome causes to the measurement signal and/or a phase change that the radome causes to the measurement signal.

In some embodiments, determining a property of the radome can comprise determining a transmission property of the radome.

Receiving the at least received portion of the measurement signal can comprise receiving a transmitted portion of the measurement signal that is transmitted through the radome. In such embodiments, the method can comprise determining the transmission property based on the transmitted portion.

In some embodiments, the method can comprise determining the transmission property based on an amplitude of the transmitted portion.

In some embodiments, the method can comprise performing a transmission measurement to determine the transmission property.

Performing a transmission measurement can comprise transmitting the measurement signal through the measurement region and receiving the at least one transmitted portion of the measurement signal.

Determining a property of the radome can comprise determining a reflection property of the radome.

In some embodiments, receiving the at least received portion of the measurement signal can comprise receiving a reflected portion of the measurement signal that is reflected by the radome. In such embodiments, the method can comprise determining the reflection property based on the reflected portion.

The method can comprise determining the reflection property based on an amplitude of the reflected portion.

The method can comprise performing a reflection measurement to determine the reflection property.

Performing the reflection measurement can comprise operating an antenna as a transceiver, thereby transmitting the measurement signal and receiving the reflected portion with the same antenna.

Performing the reflection measurement can comprise providing two antennas on the same side of the measurement region, controlling one of the antennas to transmit the measurement signal and receiving with the other antenna the reflected portion.

The method can comprise determining the property of the radome further based on at least one reference.

The method can comprise performing a reference measurement to determine the at least one reference.

Performing the reference measurement can comprise transmitting a reference measurement signal through the measurement region and receiving at least one reference received portion of the reference measurement signal and determining the at least one reference based on the at least one reference received portion of the reference measurement signal.

Performing a reference measurement can comprise performing a reference measurement with an empty measurement region thereby obtaining at least one empty reference.

Performing a reference measurement can comprise performing a reference measurement with a reference sample in the measurement region thereby obtaining at least one sampled reference.

Determining the property of the radome further based on at least one reference can comprise determining the property based on a comparison of the at least one received portion of the measurement signal with the at least one reference.

Determining the property of the radome further based on at least one reference can comprise determining the property based on a comparison of the at least one reference received portion with the at least one received portion.

Determining the property of the radome further based on at least one reference, can comprise determining the property of the radome further based on a comparison of the reference measurement signal with the measurement signal if the reference measurement signal is different from the measurement signal.

The method can comprise measuring with at least one distance sensor a distance between the distance sensors and the radome placed in the measurement region.

The method can comprise determining a position of the radome in the measurement region based on the output of the at least one distance sensor.

The method can comprise measuring with a plurality of distance sensors a respective distance between each distance sensor and the radome placed in the measurement region and determining a tilt of the radome based on the output of the distance sensors.

The method can further comprise determining the property of the radome based on the output of the at least one distance sensor.

The method can comprise performing compensating calculations if the measured distance and/or tilt of the radome deviate from a target distance and/or tilt, to determine the property of the radome.

The method can be carried out by the radome measuring system.

It will be understood, that features of the radome measuring system apply mutatis mutandis to the present method. These include, e.g., features of the measurement signal, of the antennas, of the determined property, of the reference and the reference measurement, of the distance sensors, output device and/or fixing element.

The method can be a computer-implemented method.

The method can be carried out by a processing subsystem.

The processing subsystem can refer to the processing subsystem of the radome measuring system according to the system embodiments.

In a further aspect the present invention relates to a method comprising providing the radome measuring system according to the first aspect, the data processing device controlling the antennas, thereby transmitting a measurement signal through the measurement region and receiving at least one received portion of the measurement signal, a processing subsystem determining a property of a radome placed in the measurement region based on the at least one received portion of the measurement signal.

The system can be configured to perform any of the methods according to the preceding method embodiments.

The invention is further described with the following numbered embodiments.

Below system embodiments will be discussed. These embodiments are abbreviated by the letter "S" followed by a number. Whenever reference is made to system embodiments, these embodiments are meant.
S1. A radome measuring system, comprising:
   a data processing device (20);
   a first antenna (10a) and a second antenna (10b) configured to be connected with the data processing device (20) and to face each other on opposite sides of a measurement region (30);
   wherein the data processing device (20) is configured
      to control the antennas (10a, 10b) to transmit a measurement signal (40) through the measurement region (30) and to receive at least one received portion (50a, 50b) of the measurement signal (40) and
      to determine a property of a radome (15) placed in the measurement region (30) based on the at least one received portion (50a, 50b) of the measurement signal (40).
S2. A radome measuring system according to the preceding embodiment, wherein the radome measuring system is configured for manual use.
S3. A radome measuring system according to any of the preceding embodiments, wherein the radome measuring system is configured to be handled manually.
S4. A radome measuring system according to any of the preceding embodiments, wherein the radome measuring system comprises a height of at least 20 cm and at most 150 cm, preferably at least 30 cm and at most 85 cm, such as, 83 cm.
S5. A radome measuring system according to any of the preceding embodiments, wherein the radome measuring system comprises a depth of at least 20 cm and at most 100 cm, preferably at least 40 cm and at most 60 cm, such as, 58 cm.
S6. A radome measuring system according to any of the preceding embodiments, configured such that a distance between the antennas (10a, 10b) is at least 5 cm and at most 50 cm, preferably at least 15 cm and at most 30 cm, such as, 20 cm.
S7. A radome measuring system according to any of the preceding embodiments, further comprising a main frame portion (92).
S8. A radome measuring system according to the preceding embodiment, wherein the main frame portion (92) comprises a longitudinal structure.
S9. A radome measuring system according to any of the 2 preceding embodiments, wherein the main frame portion (92) comprises a length of at least 20 cm and at most 150 cm, preferably at least 30 cm and at most 85 cm, such as, 80 cm.
S10. A radome measuring system according to any of the preceding embodiments, further comprising a supporting frame portion (96).
S11. A radome measuring system according to the preceding embodiment, wherein the supporting frame portion (96) comprises a longitudinal structure.
S12. A radome measuring system according to any of the 2 preceding embodiments, wherein the supporting frame portion (96) comprises a length of at least 20 cm and at most 100 cm, preferably at least 40 cm and at most 60 cm, such as, 50 cm.
S13. A radome measuring system according to any of the 2 preceding embodiments and with the features of embodiment S7, wherein the supporting frame portion (96) and the main frame portion (92) are arranged substantially perpendicular to each other.
S14. A radome measuring system according to any of the preceding embodiments, further comprising a single arm configured to allow mounting at least one antenna (10a, 10b) thereon.
S15. A radome measuring system according to the preceding embodiment and with the features of embodiment S7, wherein the single arm and the main frame portion (92) are attached to each other.
S16. A radome measuring system according to any of the 2 preceding embodiments and with the features of embodiment S7, wherein the single arm is configured to allow the at least one antenna (10a, 10b) mounted thereon to face the main frame portion (92).
S17. A radome measuring system according to the preceding embodiment, wherein one of the antennas (10a, 10b) is mounted on the single arm and the other of the antennas (10, 10b) is mounted on the main frame portion (92).
S18. A radome measuring system according to any of the preceding embodiments, further comprising
   a first arm (94a) configured to allow mounting at least one antenna (10a, 10b) thereon and
   a second arm (94b) configured to allow mounting at least one antenna (10a, 10b) thereon,
   such that the at least one antenna (10a, 10b) mounted on the first arm (94a) faces the at least one antenna (10a, 10b) mounted on the second arm (94b).
S19. A radome measuring system according to the preceding embodiment, wherein the first arm and the second arm (94b) are longitudinal.
S20. A radome measuring system according to any of the 2 preceding embodiments, wherein the first arm (94a) and the second arm (94b) are parallel to each other.
S21. A radome measuring system according to any of the 3 preceding embodiments, wherein the first arm (94a) and the second arm (94b) comprise a length of at least 20 cm and at most 100 cm, preferably at least 40 cm and at most 60 cm, such as, 58 cm.
S22. A radome measuring system according to any of the 4 preceding embodiments and with the features of embodiment S7, wherein the first arm (94a) and the second arm (94b) are attached to the main frame portion (92) such that they protrude from the same side of the main frame portion (92).
S23. A radome measuring system according to any of the 5 preceding embodiments, wherein the first antenna (10a) is mounted on the first arm (94a) and the second antenna (10b) is mounted on the second arm (94b).
S24. A radome measuring system according to any of the 6 preceding embodiments, wherein the first arm (94a) and the second arm (94b) are positioned at a distance of at least 5 cm and at most 50 cm, preferably at least 15 cm and at most 30 cm, such as, 20 cm or 25 cm.
S25. A radome measuring system according to any of the preceding embodiments, further comprising an enclosure (820) configured to enclose the data processing device.
S26. A radome measuring system according to the preceding embodiment and with the features of embodiment S7, wherein the enclosure (820) is mounted on the main frame portion (92).
S27. A radome measuring system according to the preceding embodiment and with the features of embodiment S22, wherein the enclosure (820) is mounted on a portion of the main frame portion (92) positioned between the first arm (94a) and the second arm (94b).
S28. A radome measuring system according to any of the 3 preceding embodiments, wherein the enclosure (820) comprises at least one electromagnetic wave absorbing material.
S29. A radome measuring system according to any of the 4 preceding embodiments, wherein the enclosure (820) comprises at least one electromagnetic wave reflecting material.
S30. A radome measuring system according to any of the 2 preceding embodiments, wherein the enclosure (820) comprises the at least one electromagnetic wave reflecting material covered with the at least one electromagnetic wave absorbing material.
S31. A radome measuring system according to any of the preceding embodiments, further comprising a display (810).
S32. A radome measuring system according to the preceding embodiment and with the features of embodiment S7, wherein the display (810) is mounted on the main frame portion (92).
S33. A radome measuring system according to any of the 2 preceding embodiments, wherein the display (810) is configured to be connected for data communication with the data processing device (20).
S34. A radome measuring system according to any of the 3 preceding embodiments, wherein the display (810) is configured to display at least one output of the data processing device (20).
S35. A radome measuring system according to any of the 4 preceding embodiments, wherein the display (810) is configured to display (810) the property of the radome (15).
S36. A radome measuring system according to any of the 5 preceding embodiments, wherein the display (810) is configured to display (810) an intermediate result computed while determining the property of the radome (15).
S37. A radome measuring system according to any of the 6 preceding embodiments, wherein the display (810) is configured to display (810) a diagnostic message indicating an operational status of the radome measuring system.
S38. A radome measuring system according to any of the 7 preceding embodiments, wherein the display (810) is configured to display (810) a log message indicating an operation being carried out by the radome measuring system.
S39. A radome measuring system according to any of the preceding embodiments, further comprising a radome supporting element (910) configured to support the radome (15) during a measurement.
S40. A radome measuring system according to the preceding embodiment, wherein the radome supporting element (910) is configured to facilitate positioning and holding the radome (15) in the measurement region (30).
S41. A radome measuring system according to any of the 2 preceding embodiments, wherein the radome supporting element (910) is configured to be substantially transparent to electromagnetic waves.
S42. A radome measuring system according to any of the preceding embodiments, further comprising a focusing element (920) and wherein the focusing element (920) comprises a blocking portion (960) and an aperture portion (940).
S43. A radome measuring system according to the preceding embodiment, wherein the aperture portion (940) is realized as a hole or opening on the focusing material.
S44. A radome measuring system according to the penultimate embodiment, wherein the aperture portion (940) comprises a different material than the blocking portion (960).
S45. A radome measuring system according to any of the 3 preceding embodiments, wherein the aperture portion (940) is configured to be substantially transparent to electromagnetic waves.
S46. A radome measuring system according to any of the 4 preceding embodiments, wherein the blocking portion (960) is configured to attenuate electromagnetic waves traversing through the blocking portion (960).
S47. A radome measuring system according to any of the 5 preceding embodiments, wherein the blocking portion (960) comprises or is made of at least one electromagnetic wave absorbing material.
S48. A radome measuring system according to any of the 6 preceding embodiments, wherein the blocking portion (960) comprises or is made of at least one electromagnetic wave reflecting material.
S49. A radome measuring system according to the 2 preceding embodiments, wherein the blocking portion (960) comprises or is made of the at least one electromagnetic wave reflecting material covered by the at least one electromagnetic absorbing material.
S50. A radome measuring system according to any of the 7 preceding embodiments, wherein the blocking portion (960) is configured to attenuate electromagnetic waves traversing through the blocking portion (960) by at least 10dB.
S51. A radome measuring system according to any of the 8 preceding embodiments, wherein the aperture portion (940) comprises an area of at least 75 mm² and at most 750 mm², preferably at least 100 mm² and at most 300 mm², such as 255 mm².
S52. A radome measuring system according to any of the 8 preceding embodiments, wherein the aperture portion (940) comprises a circular shape.
S53. A radome measuring system according to any of the 9 preceding embodiments, wherein the aperture portion (940) comprises an elliptic shape.
S54. A radome measuring system according to any of the 10 preceding embodiments, wherein the aperture portion (940) comprises a square shape.
S55. A radome measuring system according to any of the preceding embodiments, wherein the system further comprises a measurement initiating interface configured to receive an initiating command from a user and to provide the initiating command to the data processing device.
S56. A radome measuring system according to the preceding embodiment, wherein the measurement initiating interface is configured to be driven by a foot of the user.
S57. A radome measuring system according to any of the preceding embodiments, wherein the system further comprises at least one antenna channel (60), each configured to connect the data processing device with one of the antennas (10a, 10b).
S58. A radome measuring system according to the preceding embodiment, wherein each of the antenna channels (60) is configured to convey microwave-frequency signals.
S59. A radome measuring system according to any of the 2 preceding embodiments, wherein each of the antenna channels (60) is configured to convey electromagnetic waves with a frequency between 30 GHz to 160 GHz.
S60. A radome measuring system according to any of the 3 preceding embodiments, wherein each of the antenna channels (60) is configured to convey electromagnetic waves with a frequency between 70 GHz to 90 GHz.
S61. A radome measuring system according to any of the 4 preceding embodiments, wherein each one of the antenna channels (60) comprises a respective microstrip portion.
S62. A radome measuring system according to the preceding embodiment, wherein each one of the microstrip portions is directly connected with the data processing device.
S63. A radome measuring system according to any of the 5 preceding embodiments, wherein each one of the antenna channels (60) further comprises a respective external portion.
S64. A radome measuring system according to the preceding embodiment, wherein each external portion comprises a respective waveguide and/or a respective coaxial cable.
S65. A radome measuring system according to the preceding embodiment and with the features of embodiment S61, wherein each of the antenna channels (60) comprises a respective connector configured to connect the respective microstrip portion with the respective external portion.
S66. A radome measuring system according to the preceding embodiment, wherein each connector is
   a microstrip-to-waveguide connector configured to allow an electromagnetic wave transition from the respective microstrip portion to the respective waveguide and/or
   a microstrip-to-coaxial cable connector configured to allow an electromagnetic wave transition from the respective microstrip portion to the respective coaxial cable.
S67. A radome measuring system according to any of the 4 preceding embodiments and with the features of embodiment S61, wherein each antenna channel (60) is configured
   to allow the measuring signal to traverse
      from the data processing device to the respective microstrip portion, and
      from the respective microstrip portion to the external portion and
      from the external portion to the respective antenna (10a, 10b)
   and/or to allow the measuring signal to traverse in reverse to the above.
S68. A radome measuring system according to any of the 11 preceding embodiments, wherein the system comprises a first antenna channel (60) configured to connect the data processing device with the first antenna (10a) and a second antenna channel (60) configured to connect the data processing device with the second antenna (10b).
S69. A radome measuring system according to the preceding embodiment and with the features of embodiments S23 and S63, wherein the external portion of the first antenna channel (60) is provided, at least in part, in the first arm (94a) and the external portion of the second antenna channel (60) is provided, at least in part, in the second arm (94b).
S70. A radome measuring system according to any of the preceding embodiments, wherein the system comprises a radar unit (1) and wherein the radar unit (1) comprises the data processing device (20).
S71. A radome measuring system according to the preceding embodiment, wherein the radar unit (1) comprises a printed-circuit-board (PCB) and wherein the data processing device is electrically connected to the PCB of the radar unit.
S72. A radome measuring system according to any of the 2 preceding embodiments and with the features of embodiment S57, wherein each antenna channel (60) is embedded at least in part in the radar unit.
   For example, each antenna channel (60) can be embedded at least in part on the PCB of the radar unit.
S73. A radome measuring system according to the preceding embodiment and with the features of embodiment S61, wherein each microstrip portion is embedded in the PCB of the radar unit.
S74. A radome measuring system according to the preceding embodiment and with the features of embodiment S65, wherein each connector is mechanically fastened to the PCB and electrically connected to a respective microstrip portion.
S75. A radome measuring system according to any of the preceding embodiments, wherein the measurement signal (30) is an electromagnetic wave (30).
S76. A radome measuring system according to the preceding embodiment wherein the measurement signal (30) comprises a frequency between 30 GHz to 160 GHz.
S77. A radome measuring system according to any of the 2 preceding embodiments, wherein the measurement signal (30) comprises a frequency between 70 GHz to 90 GHz.
S78. A radome measuring system according to any of the preceding embodiments, wherein the measurement signal (30) is a modulated signal (30).
S79. A radome measuring system according to any of the preceding embodiments, wherein the first antenna (10a) and the second antenna (10b) are aligned such that a main lobe of the first antenna (10a) and a main lobe of the second antenna (10b) intersect.
S80. A radome measuring system according to any of the preceding embodiments, wherein the antennas (10a, 10b) are arranged such that the first antenna (10a) faces a first side of the radome (15) placed in the measurement region (30) and the second antenna (10b) faces a second side, of the radome (15) placed in the measurement region (30), wherein the first and the second side of the radome (15) are opposite to each other.
S81. A radome measuring system according to any of the preceding embodiments, wherein the property is indicative of a dielectric property of the radome (15).
S82. A radome measuring system according to any of the preceding embodiments, wherein the property is indicative of a scattering parameter of the radome (15).
S83. A radome measuring system according to any of the preceding embodiments, wherein the property is indicative of an attenuation that the radome (15) causes to the measurement signal (40).
S84. A radome measuring system according to any of the preceding embodiments, wherein the property is indicative of a one-way attenuation that the radome (15) causes to the measurement signal (40).
S85. A radome measuring system according to any of the preceding embodiments, wherein the property is indicative of a frequency change that the radome (15) causes to the measurement signal (40).
S86. A radome measuring system according to any of the preceding embodiments, wherein the property is indicative of a phase change that the radome (15) causes to the measurement signal (40).
S87. A radome measuring system according to any of the preceding embodiments, wherein the property comprises a transmission property of the radome (15).
S88. A radome measuring system according to the preceding embodiment, wherein the transmission property is a transmission coefficient of the radome (15).
S89. A radome measuring system according to any of the 2 preceding embodiments, wherein the at least one received portion (50a, 50b) of the measurement signal (40) comprises a transmitted portion (50a) of the measurement signal (50) that is transmitted through the radome (15).
S90. A radome measuring system according to the preceding embodiment, wherein the data processing device (20) is configured to determine the transmission property based on the transmitted portion (50a).
S91. A radome measuring system according to the preceding embodiment, wherein the data processing device (20) is configured to determine the transmission property based on an amplitude of the transmitted portion (50a).
S92. A radome measuring system according to any of the 2 preceding embodiments, wherein the data processing device (20) is configured to determine the transmission property based on a comparison of the amplitude of the transmitted portion (50a) and an amplitude of the measurement signal (50) as transmitted.
S93. A radome measuring system according to any of the 3 preceding embodiments, wherein the data processing device (20) is configured to determine the transmission property based on a ratio of the amplitude of the transmitted portion (50a) over an amplitude of the measurement signal (50) as transmitted.
S94. A radome measuring system according to any of the 7 preceding embodiments, wherein the system is configured to perform a transmission measurement and the data processing device (20) is configured to determine the transmission property based on the transmission measurement.
S95. A radome measuring system according to any of the 8 preceding embodiments, wherein the data processing device (20) is configured
   to control the first antenna (10a) to transmit the measurement signal (40) through the measurement region (30) and
   to control the second antenna (10b) to receive the at least one transmitted portion (50b) of the measurement signal (40) to perform the transmission measurement.
S96. A radome measuring system according to any of the 9 preceding embodiments, wherein the data processing device (20) is configured to control the second antenna (10b) to transmit the measurement signal (40) through the measurement region (30) and the first antenna (10a) to receive the at least one transmitted portion (50b) of the measurement signal (40) to perform the transmission measurement.
S97. A radome measuring system according to any of the preceding embodiments, wherein the property comprises a reflection property of the radome (15).
S98. A radome measuring system according to the preceding embodiment, wherein the reflection property is a reflection coefficient of the radome (15).
S99. A radome measuring system according to any of the 2 preceding embodiments, wherein the at least one received portion (50a, 50b) of the measurement signal (40) comprises a reflected portion (50b) of the measurement signal (50) reflected by the radome (15).
S100. A radome measuring system according to the preceding embodiment, wherein the data processing device (20) is configured to determine the reflection property based on the reflected portion (50b).
S101. A radome measuring system according to any of the 2 preceding embodiments, wherein the data processing device (20) is configured to determine the reflection property based on an amplitude of the reflected portion (50b).
S102. A radome measuring system according to any of the 3 preceding embodiments, wherein the data processing device (20) is configured to determine the reflection property based on a comparison of the amplitude of the reflected portion (50b) and an amplitude of the measurement signal (50) as transmitted.
S103. A radome measuring system according to any of the 4 proceeding embodiments, wherein the data processing device (20) is configured to determine the reflection property based on a ratio of the amplitude of the reflected portion (50b) over an amplitude of the measurement signal (50) as transmitted.
S104. A radome measuring system according to any of the 7 preceding embodiments, wherein the system is configured to perform a reflection measurement and the data processing device (20) is configured to determine the reflection property based on the reflection measurement.
S105. A radome measuring system according to any of the preceding embodiments, wherein the radar unit (1) and the first antenna (10a) are configured to be operable as a monostatic radar.
S106. A radome measuring system according to any of the preceding embodiments, wherein the first antenna (10a) is configured as a transceiver.
S107. A radome measuring system according to any of the preceding embodiments, wherein the radar unit (1) comprises a signal coupler (12) and the first antenna (10a) is coupled to a transmission line and to a receiving line of the radar unit (1) via the coupler (12).
S108. A radome measuring system according to the preceding embodiment, wherein the coupler (12) is a rat race coupler (12).
S109. A radome measuring system according to any of the preceding embodiments and with the features of embodiment S104 and S105, wherein the data processing device (20) is configured to control the first antenna (10a) to transmit the measurement signal (40) through the measurement region (30) and to receive the at least one reflected portion (50b) of the measurement signal (40) to perform the reflection measurement.
S110. A radome measuring system according to any of the preceding embodiments, wherein the system comprises a plurality of first antennas (10a) and the radar unit (1) and the plurality of the first antennas (10a) are configured to be operable as a bistatic or multistatic radar.
S111. A radome measuring system according to the preceding embodiment, wherein one first antenna (10a) is configured as a transmitter antenna and another first antenna (10a) is configured as a receiver antenna.
S112. A radome measuring system according to the preceding embodiment and with the features of embodiment S104, wherein the data processing device (20) is configured to control the first antenna (10a) configured as a transmitter antenna to transmit the measurement signal (40) through the measurement region (30) and the first antenna (10b) configured as a receiver antenna to receive the at least one reflected portion (50b) of the measurement signal (40).
S113. A radome measuring system according to any of the preceding embodiments, wherein the data processing device (20) is configured to determine the property of the radome (15) further based on at least one reference.
S114. A radome measuring system according to the preceding embodiment, wherein the system is configured to perform a reference measurement and the data processing device (20) is configured to determine the at least one reference based on the reference measurement.
S115. A radome measuring system according to the preceding embodiment, wherein the data processing device (20)
   is configured to control the antennas (10a, 10b) to transmit a reference measurement signal (40r) through the measurement region (30) and to receive at least one reference received portion (50a-r, 50b-r) of the reference measurement signal (40r) and to determine the at least one reference based on the at least one reference received portion (50a-r, 50b-r) of the reference measurement signal (40-r),
   to perform the reference measurement.
S116. A radome measuring system according to any of the 3 preceding embodiments, wherein the data processing device (20) is configured to determine the property based on a comparison of the at least one received portion (50a, 50b) of the measurement signal (40) with the at least one reference.
S117. A radome measuring system according to any of the 4 preceding embodiments, wherein the data processing device is configured to determine the property of the radome (15) further based on a comparison of the at least one reference received portion (50a-r, 50b-r) with the at least one received portion (50a, 50b).
S118. A radome measuring system according to any of 3 preceding embodiments, wherein the data processing device (20) is configured to control the antennas (10a, 10b) to transmit the reference measurement signal (40r) identical to the measurement signal (40).
S119. A radome measuring system according to any of the 4 preceding embodiments, wherein the reference measurement signal (40r) is different from the measurement signal (40) and the data processing device is configure to determine the property of the radome (15) further based on a comparison of the reference measurement signal (50r) with the measurement signal (50).
S120. A radome measuring system according to any of the 6 preceding embodiments, wherein the data processing device (20) is configured to perform a reference measurement with an empty measurement region (30) to obtain at least one empty reference.
   That is, there is no external element positioned in the measurement region. For example, the measurement region can be a space filled with air.
S121. A radome measuring system according to any of the 7 preceding embodiments, wherein the data processing device is configured to perform a reference measurement with a reference sample (15r) in the measurement region (30) to obtain at least one sampled reference.
S122. A radome measuring system according to the preceding embodiment, wherein the reference sample is a sample with known properties.
S123. A radome measuring system according to any of the 2 preceding embodiments, wherein the reference sample (15r) comprises a reflective material, such as, a highly reflective material.
S124. A radome measuring system according to any of the 3 preceding embodiments, wherein the reference sample (15r) is a metal plate (15r).
S125. A radome measuring system according to any of the preceding embodiments, wherein the system further comprises at least one distance sensor (70) configured to measure a distance between the distance sensors (70) and the radome (15) placed in the measurement region (30).
S126. A radome measuring system according to the preceding embodiment, wherein the data processing device (20) is configured to determine a position of the radome (15) in the measurement region (30) based on the output of the at least one distance sensors (70).
S127. A radome measuring system according to the any of the 2 preceding embodiments,
   wherein the system comprises a plurality of distance sensors (70) and
   wherein the data processing device (20) is configured to determine a tilt of the radome (15) based on the output of the distance sensors (70).
   The tilt of the radome can be an angle which is a deterministic function of an incidence angle of the measurement signal on the radome.
S128. A radome measuring system according to any of the 3 preceding embodiments, wherein the at least one distance sensor (70) is a laser-based distance sensor (70).
   Preferably all the distance sensors (70) are laser-based distance sensor (70).
S129. A radome measuring system according to the preceding embodiment, wherein the at least one laser-based distance sensor (70) is configured to emit visible light to measure the distance.
S130. A radome measuring system according to the preceding embodiment, wherein the at least one laser-based distance sensor (70) that is configured to emit visible light, is further configured such that the emitted visible light when incident on the radome (15) placed in the measurement region (30) indicates a measurement area of the radome (15) whereon the measurement signal (40) is incident.
S131. A radome measuring system according to any of the 6 preceding embodiments, wherein the at least one distance sensor (70) is placed on one of the opposite sides of the measurement region (30) wherein the antennas (10a, 10b) are positioned.
S132. A radome measuring system according to any of the 7 preceding embodiments, wherein the at least one distance sensor (90) is positioned such that it faces the measurement region (30).
S133. A radome measuring system according to any of the 8 preceding embodiments, wherein the relative position between the distance sensors (70) is known.
S134. A radome measuring system according to any of the 9 preceding embodiments, wherein the distance sensors (70) are fixed.
S135. A radome measuring system according to any of the 10 preceding embodiments, wherein the system comprises at least two distance sensors (70).
S136. A radome measuring system according to any of the 11 preceding embodiments, wherein the system comprises at least three distance sensors (70).
S137. A radome measuring system according to any of the 12 preceding embodiments, wherein the data processing device (20) is configured to determine the property of the radome (15) further based on the output of the distance sensors (70).
S138. A radome measuring system according to any of the 13 preceding embodiments, wherein the data processing device (20) is configured to perform compensating calculations if the measured distance and/or tilt of the radome (15) deviate from a target distance and/or tilt, to determine the property of the radome (15).
S139. A radome measuring system according to any of the preceding embodiment, wherein the system comprises an output device.
S140. A radome measuring system according to the preceding embodiment and with the features of embodiments S126 and/or S127, wherein the output device is configured to output an indication whether a required distance and/or tilt of the radome (15) is maintained.
S141. A radome measuring system according to any of the 2 preceding embodiments and with the features of embodiment S126, wherein the output device is configured to output the measured distance of the radome (15).
S142. A radome measuring system according to any of the 3 preceding embodiments and with the features of embodiment S127, wherein the output device is configured to output the measured tilt of the radome (15).
S143. A radome measuring system according to any of the 4 preceding embodiments wherein the output device is configured to output the determined property of the radome (15).
S144. A radome measuring system according to any of the 5 preceding embodiments and with the features of embodiment S31, wherein the output device comprises the display (810).
S145. A radome measuring system according to any of the preceding embodiments, wherein the system comprises a frame (90) configured to allow mounting therein the radar unit (1) and the second antenna (10b).
S146. A radome measuring system according to the preceding embodiment, wherein the frame (90) is U-shaped.
S147. A radome measuring system according to any of the 2 preceding embodiments, wherein the frame comprises a solid material.
S148. A radome measuring system according to any of the 3 preceding embodiments, wherein an outer surface of the frame facing the measurement region is coated with a radiation-absorbent coating (95).
S149. A radome measuring system according to the preceding embodiment, wherein the radiation absorbent coating (95) is made of a radiation-absorbent material.
S150. A radome measuring system according to any of the 2 preceding embodiments, wherein the radiation-absorbent coating (95) comprises arrays of protrusion pieces (97).
S151. A radome measuring system according to the preceding embodiment, wherein the protrusion pieces (97) are pyramid shaped.
S152. A radome measuring system according to any of the 7 preceding embodiments, wherein the frame (90) comprises a handle (93).
S153. A radome measuring system according to any of the 8 preceding embodiments and with the features of embodiment S139, wherein the output device (80) is mounted on the frame (90).
S154. A radome measuring system according to any of the 9 preceding embodiments and with the features of embodiment S7, wherein the frame (90) comprises the main frame portion (92).
S155. A radome measuring system according to any of the 10 preceding embodiments and with the features of embodiment S10, wherein the frame (90) comprises the supporting frame portion (96).
S156. A radome measuring system according to any of the 11 preceding embodiments and with the features of embodiment S14, wherein the frame (90) comprises the single arm.
S157. A radome measuring system according to any of the 12 preceding embodiments and with the features of embodiment S18, wherein the frame (90) comprises the first arm (94a) and the second arm (94b).
S158. A radome measuring system according to any of the preceding embodiments, wherein the first antenna (10a) is an embedded antenna (10a).
S159. A radome measuring system according any of the preceding embodiments and with the features of embodiment S71, wherein the first antenna is embedded on the PCB of the radar unit.
S160. A radome measuring system according to any of the preceding embodiments, wherein the first antenna (10) is an on-chip integrated antenna (10a).
S161. A radome measuring system according to any of the preceding embodiments, wherein the first antenna (10) is a planar antenna (10a).
S162. A radome measuring system according to any of the preceding embodiments, wherein the first antenna (10) is a waveguide antenna (10a).
S163. A radome measuring system according to any of preceding embodiments, wherein the system comprises a battery configured to provide electrical energy to the system components.
S164. A radome measuring system according to any of the preceding embodiments, wherein the system is a portable device for determining the property of the radome.

Below method embodiments will be discussed. These embodiments are abbreviated by the letter "M" followed by a number. Whenever reference is made to method embodiments, these embodiments are meant.
M1. A method comprising
   transmitting a measurement signal (40) through a measurement region (30) and receiving at least one received portion (50a, 50b) of the measurement signal (40);
   determining a property of a radome (15) placed in the measurement region (30) based on the at least one received portion (50a, 50b) of the measurement signal (40).
M2. The method according to any of the preceding method embodiments, wherein the step of determining a property of the radome (15) comprises determining at least one of
   a dielectric property of the radome (15);
   a scattering parameter of the radome (15);
   an attenuation that the radome (15) causes to the measurement signal (40);
   a one-way attenuation that the radome (15) causes to the measurement signal (40);
   a frequency change that the radome (15) causes to the measurement signal (40);
   a phase change that the radome (15) causes to the measurement signal (40).
M3. The method according to any of the preceding method embodiments, wherein the step of determining a property of the radome (15) comprises determining a transmission property of the radome (15).
M4. The method according to the preceding embodiment,
   wherein receiving the at least received portion (50a, 50b) of the measurement signal (40) comprises receiving a transmitted portion (50a) of the measurement signal (50) that is transmitted through the radome (15) and
   the method comprises determining the transmission property based on the transmitted portion (50a).
M5. The method according to the preceding embodiment, wherein the method comprises determining the transmission property based on an amplitude of the transmitted portion (50a).
M6. The method according any of the 3 preceding embodiments, wherein the method comprises performing a transmission measurement to determine the transmission property.
M7. The method according to the preceding embodiment, wherein performing a transmission measurement comprises transmitting the measurement signal (40) through the measurement region (30) and receiving the at least one transmitted portion (50b) of the measurement signal (40).
M8. The method according to any of the preceding method embodiments, wherein the step of determining a property of the radome (15) comprises determining a reflection property of the radome (15).
M9. The method according to the preceding embodiment,
   wherein receiving the at least received portion (50a, 50b) of the measurement signal (40) comprises receiving a reflected portion (50b) of the measurement signal (50) that is reflected by the radome (15) and
   the method comprises determining the reflection property based on the reflected portion (50b).
M10. The method according to the preceding embodiment, wherein the method comprises determining the reflection property based on an amplitude of the reflected portion (50b).
M11. The method according to any of 3 preceding embodiments, wherein the method comprises performing a reflection measurement to determine the reflection property.
M12. The method according to the preceding embodiment, wherein performing the reflection measurement comprises operating an antenna as a transceiver, thereby transmitting the measurement signal (40) and receiving the reflected portion (50b) with the same antenna.
M13. The method according to any of the 2 preceding embodiment, wherein performing the reflection measurement comprises
   providing two antennas on the same side of the measurement region (30),
   controlling one of the antennas to transmit the measurement signal (40) and
   receiving with the other antenna the reflected portion (50b).
M14. The method according to any of the 3 preceding embodiments, wherein the method comprises determining the property of the radome (15) further based on at least one reference.
M15. The method according to the preceding embodiment, wherein the method comprises performing a reference measurement to determine the at least one reference.
M 16. The method according to the preceding embodiment, wherein performing the reference measurement comprises
   transmitting a reference measurement signal (40r) through the measurement region (30) and receiving at least one reference received portion (50a-r, 50b-r) of the reference measurement signal (40r)
   determining the at least one reference based on the at least one reference received portion (50a-r, 50b-r) of the reference measurement signal (40-r).
M17. The method according to any of the 2 preceding embodiments, wherein performing a reference measurement comprises performing a reference measurement with an empty measurement region (30) thereby obtaining at least one empty reference.
M18. The method according to any of the 3 preceding embodiments, wherein performing a reference measurement comprises performing a reference measurement with a reference sample (15r) in the measurement region (30) thereby obtaining at least one sampled reference.
M19. The method according to any of the 3 preceding embodiments, wherein determining the property of the radome (15) further based on at least one reference comprises determining the property based on a comparison of the at least one received portion (50a, 50b) of the measurement signal (40) with the at least one reference.
M20. The method according to any of the 4 preceding embodiments, wherein determining the property of the radome (15) further based on at least one reference comprises determining the property based on a comparison of the at least one reference received portion (50a-r, 50b-r) with the at least one received portion (50a, 50b).
M21. The method according to any of the 5 preceding embodiments, wherein determining the property of the radome (15) further based on at least one reference, comprises determining the property of the radome (15) further based on a comparison of the reference measurement signal (50r) with the measurement signal (50) if the reference measurement signal (40r) is different from the measurement signal (40).
M22. The method according to any of the preceding method embodiments, wherein the method comprises measuring with at least one distance sensor (70) a distance between the distance sensors (70) and the radome (15) placed in the measurement region (30).
M23. The method according to the preceding embodiment, wherein the method comprises determining a position of the radome (15) in the measurement region (30) based on the output of the at least one distance sensor (70).
M24. The method according to any of the 2 preceding embodiments, wherein the method comprises
   measuring with a plurality of distance sensors (70) a respective distance between each distance sensor (70) and the radome (15) placed in the measurement region (30) and
   determining a tilt of the radome (15) based on the output of the distance sensors (70).
M25. The method according to any of the 3 preceding embodiments, wherein at least one distance sensor (70) is a laser-based distance sensor (70)
M26. The method according to the preceding embodiment, wherein the at least one laser-based distance sensor (70) is configured to emit visible light to measure the distance and the method comprises indicating with the at least one laser-based distance sensors (70) a measurement area of the radome (15) whereon the measurement signal (40) is incident.
M27. The method according to any of the 5 preceding embodiments, further comprising determining the property of the radome (15) based on the output of the at least one distance sensor (70).
M28. The method according to any of the 6 preceding embodiments, wherein the method comprises performing compensating calculations if the measured distance and/or tilt of the radome (15) deviate from a target distance and/or tilt, to determine the property of the radome (15).
M29. The method according to any of the preceding method embodiments, wherein the method is carried out by the radome measuring system according to any of the preceding system embodiments.
It will be understood, that features of the radome measuring system apply *mutatis mutandis* to the present method. These include, e.g., features of the measurement signal, of the antennas, of the determined property, of the reference and the reference measurement, of the distance sensors, output device and/or fixing element.
M30. The method according to any of the preceding method embodiments, wherein the method is a computer-implemented method.
M31. The method according to any of the preceding method embodiments, wherein the method is carried out by a processing subsystem.
M32. The method according to the preceding embodiment, wherein the processing subsystem refers to the processing subsystem (20) of the radome measuring system according to the system embodiments.

Below further method embodiments will be discussed. These embodiments are abbreviated by the letter "A" followed by a number.
A1. A method comprising
   providing the radome measuring system according to any of the preceding system embodiments;
   the data processing device (20) controlling the antennas (10a, 10b) thereby transmitting a measurement signal (40) through the measurement region (30) and receiving at least one received portion (50a, 50b) of the measurement signal (40);
   a processing subsystem determining a property of a radome (15) placed in the measurement region (30) based on the at least one received portion (50a, 50b) of the measurement signal (40).
A2. The method according to the preceding embodiment and comprising any of the steps of the method according to embodiments M1 to M32.
A3. The method according to any of the 2 preceding embodiments, wherein the processing subsystem is the data processing device (20).

Below a further system embodiment will be discussed.

S165. The system according to any of the preceding system embodiments, wherein the system is configured to perform any of the methods according to the preceding method embodiments.

### Brief description of the drawings

- Fig. 1: is a schematic illustration of an embodiment of a radome measuring system comprising a first antenna and a second antenna wherein the first antenna is embedded in the radar unit;
- Fig. 2a: depicts an embodiment of a radar unit in a monostatic setup;
- Fig. 2b: depicts an embodiment of a radar unit in a bistatic setup;
- Fig. 3: is a schematic illustration of a further embodiment of the radome measuring system;
- Fig. 4: is a schematic illustration of the radome measuring system configured to perform a reference measurement with an empty measurement region;
- Fig. 5: is a schematic illustration of the radome measuring system configured to perform a reference measurement with a sample in the measurement region;
- Fig. 6: is a schematic illustration of a further embodiment of the radome measuring system;
- Fig. 7: depicts a further embodiment of the radome measuring system comprising at least one distance sensor;
- Fig. 8: depicts another embodiment of the radome measurement system;
- Fig. 9: depicts an embodiment of the radome measurement system further comprising a radome supporting element 910 and a focusing element 920,

### Detailed description of the drawings

Throughout the description of the drawings, like features are denoted by like reference numerals. However, for ease of illustration and brevity of the description, some reference numerals may be omitted in some of the Figures.

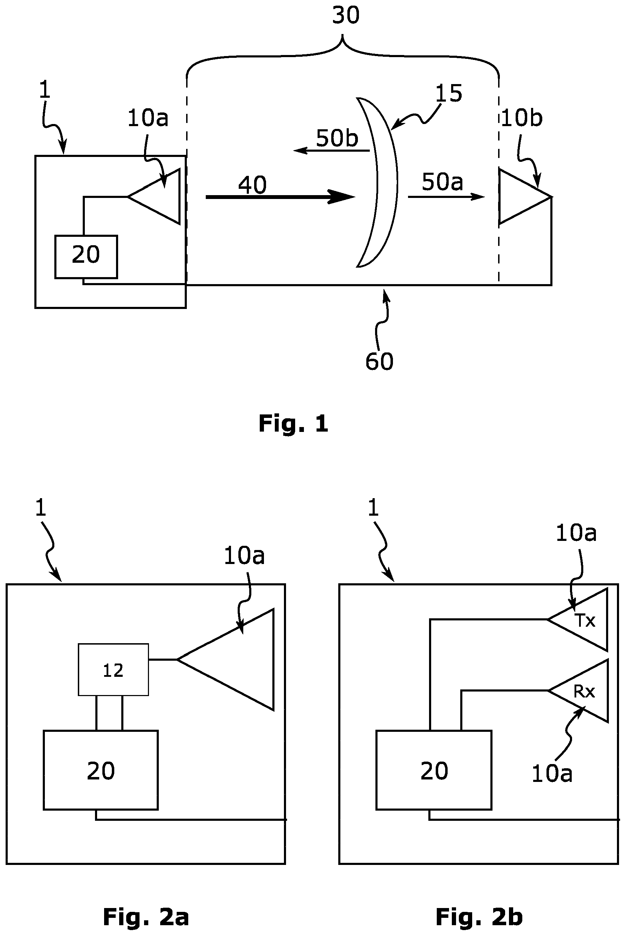

Fig. 1 illustrates a radome measuring system according to an embodiment of the present invention.

The system can comprise a radar unit 1 and a second antenna 10b. The radar unit 1 can comprise embedded therein a data processing device 20 and a first antenna 10a. That is, the first antenna 10a can be integrated or embedded in the radar unit 1. More particular, the radar unit 1 can comprise a PCB wherein the data processing device 20 can be electrically connected with the PCB and the first antenna 10a can be embedded in the PCB. For example, the radar unit 1 can be a radar-on-chip. A typical example of a radar-on-chip is the IWR1642 developed by Texas Instruments^{©}.

The system can further comprise an antenna channel 60, which can be an RF antenna channel 60 and can be configured for establishing a radio frequency connection between the second antenna 10b and the radar unit 1. For example, the radar unit 1 can comprise a port wherein the antenna channel 60 can be connected.

The data processing device 20 may comprise one or more processing units configured to carry out computer instructions of a program (i.e., machine readable and executable instructions). The processing unit(s) can be singular or plural. For example, the data processing device 20 may comprise at least one of central processing unit (CPU), graphical processing unit (processing unit) GPU, digital signal processor (DSP), accelerated processing unit (APU), application specific integrated circuit (ASIC), application specific instruction set processor (ASIP), field programmable gate array (FPGA), artificial intelligence (AI) accelerator and tensor core, each of which can be in the singular or plural.

The data processing device can comprise an integrated radar chip with a chip integrated computing unit.

Preferably, the processing subsystem can comprise a programable microcontroller unit and a digital signal processor. The microcontroller unit can be configured to control the antennas 10a, 10b of the system. On the other hand, the digital signal processor can be configured for signal processing, such as, processing the signals received by the antennas 10a, 10b. The microcontroller unit can further be configured to control the digital signal processor. For example, the microcontroller unit and the digital signal processor can be in a master-slave configuration.

The data processing device 20 may comprise one or more memory component(s), such as, main memory (e.g., RAM), cache memory (e.g., SRAM) and/or secondary memory (e.g., HDD, SDD). The data processing device 20 may comprise volatile and/or non-volatile memory, such, a synchronous RAM (SRAM), dynamic RAM (DRAM), synchronous dynamic RAM (SDRAM), Flash Memory, magnetic (MRAM), ferroelectric RAM (FRAM) or parameter RAM (P-RAM).

The data processing device 20 may comprise one or more internal communication interface(s) or component(s) (e.g., busses) configured to facilitate electronic data exchange between the components of the data processing device 20, such as, the communication between the memory components and the processing components.

The data processing device 20 may comprise one or more external communication interface(s) or component(s), configured to facilitate electronic data exchange between the data processing device 20 and devices or networks external to the data processing device 20. For example, the external communication component can comprise at least one network interface card which can be configured to connect the data processing device 20 to a (wired and/or wireless) network, such as, to the Internet and/or to a cellular network. The external communication component can be configured to transfer electronic data using a standardized communication protocol (e.g., USB and/or TCP/IP protocol).

The second antenna 10b can be provided locally separated and at a distance from the radar unit 1. The radar unit 1 and the second antenna 10b can be arranged such that the first antenna 10a can face the second antenna 10b. Thus, a measurement region 30 can be defined between the antennas 10a, 10b. More particularly, the antennas 10a and 10b are provided on opposite sides of the measurement region 30. Therefore, signals that are exchanged between the antennas 10a and 10b can traverse the measurement region 30. Hence, if a device under test (DUT) 15, e.g., a radome 15 is placed in the measurement region 30 the signals emitted by the antennas 10a and/or 10b can be incident on the DUT.

Fig. 1 further illustrates a measurement signal 40 transmitted by the first antenna 10a. The measurement signal can traverse through the measurement region 30 and can become incident on the radome 15, more particularly on a first side of the radome 15 which can face the first antenna 10a. Therein, a portion of the measurement signal 40 can be reflected by the radome 50. This is illustrated by the arrow 50b and said portion can be referred to as the reflected portion 50b of the measurement signal 40. Another portion of the measurement signal can be transmitted through the radome 50, exit from a second side of the radome 15 opposite to the first, traverse through the measurement region 30 and be received by the second antenna 10b. This is illustrated by the arrow 50a and said portion can be referred to as the transmitted portion 50a.

Wave properties of the transmitted portion 50a and of the reflected portion 50b, such as, amplitude, phase, frequency and speed depend on properties of the radome 15. More particularly, wave properties of the transmitted portion 50a depend on a transmission property of the radome 15, which is also referred to as the transmissivity. Similarly, wave properties of the reflected portion 50b depend on a reflection property of the radome 15, more particularly of the first side of the radome 15 (in the illustrated example), which is also referred to as the reflectivity.

Therefore, by receiving a received portion 50a, 50b of the measurement signal 40 a property of the radome can be determined. More particularly, based on the transmitted portion 50a a transmission property of the radome 15 can be determined and based on the reflected portion 50b a reflection property of the radome 15 can be determined. This determination(s) can be performed by the processing subsystem 40.

Fig. 1 illustrates performing a measurement of the radome according to a first direction from the first antenna 10a to the second antenna 10b. It will be understood, that the system can also be configured to perform the measurement in reverse. That is, the measurement signal 40 can be transmitted by the second antenna 10b. Therefore, the reflection portion 50b is created by the second surface of the radome 15 facing the second antenna 10b and the transmitted portion 50a exits from the first surface of the radome 15 facing the first antenna 10a.

Fig. 2a illustrates the radar unit 1 of the radome measuring system configured as a monostatic radar. In this embodiment, at least one of the integrated antennas 10a can be used as a transceiver. More particularly, the first antenna 10a can be coupled, using a coupler 12, to a transmission line and to a receiver line (as shown by the two lines between the coupler 12 and the data processing device 20). In this embodiment, the transmission of the measurement signal 40 and the reception of the reflected portion 50b) can be performed by the same first antenna 10a.

Fig. 2b illustrates an alternative configuration of the radar unit 1 in a bistatic setup. In this configuration, the radar unit 1 comprises multiple integrated antennas 10a wherein at least one is used a transmitting antenna and at least one other is used as a receiving antenna. In this embodiment, the transmission of the measurement signal 40 and the reception of the reflected portion 50b) can be performed by different integrated antennas 10a.

It will be understood that the radar unit 1 of the system illustrated in Fig. 1 can comprise any of the configurations illustrated in Figs. 2a and 2b. In some embodiments, the radar unit 1 can comprises a mixed configuration, wherein at least one of the integrated antennas 10a is used as a transceiver (as illustrated in Fig. 2a) and at least two other of the integrated antennas 10a are used in a bistatic setup (as illustrated in Fig. 2b). In some embodiments, the radar unit 1 can comprise a multistatic setup.

In general, it can be advantageous for the radar unit 1 to be configured for transmitting and receiving electromagnetic waves as this allows a reflection measurement without the need of external antennas.

Moreover, it will be understood that in some embodiments the first antenna 10a, may not be embedded in the radar unit as illustrated in Figs. 1, 2a and 2b. However, the above discussion (without the antenna embedding feature) applies mutatis-mutandis to such embodiments too. In such embodiments, the first antenna 10a and the data processing device can be connected with a respective antenna channel 60.

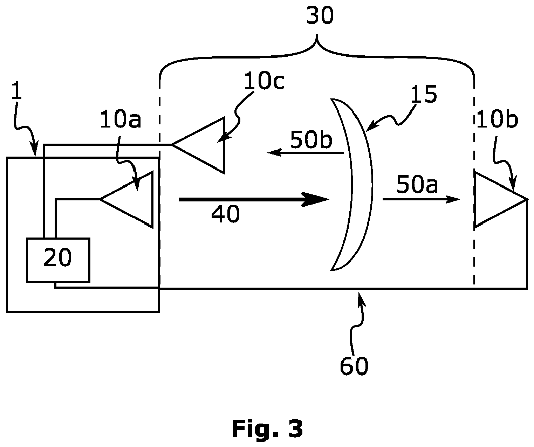

Fig. 3 illustrates a further embodiment of the radome measuring system. The only difference between this embodiment and the one illustrated in Fig. 1 is that the system further comprises another first antenna 10c, which can be external to the radar unit 1. The system can comprise a further antenna channel 60 for establishing an RF connection between the radar unit 1 and the other first antenna 10c.

In this embodiment, the other first antenna 10c can be utilized for allowing the radar unit 1 to perform a reflection measurement. The other first antenna 10c can be provided on the same side of the measurement region 30 as the first antenna 10a. The other first antenna 10c can be particularly advantageous when the radar unit 1 is configured either only for transmission or only for reception of electromagnetic waves. Therefore, the other first antenna 10c can provide the missing capability, hence allowing for a reflection measurement. In other words, the other first antenna 10c and the first antenna 10a can be configured in a bistatic setup. Therefore, the other first antenna 10c and the radar unit 1 can form a bistatic radar.

It will be understood, that the other first antenna 10c can be optional when the radar unit comprises a monostatic, bistatic or multistatic configuration as discussed with reference to Figs. 2a and 2b.

In yet a further embodiment, the radome measuring system can comprise another second antenna (not shown). The system can comprise a further antenna channel 60 for establishing an RF connection between the radar unit 1 and the other second antenna. The other second antenna can be provided on the same side of the measurement region 30 as the second antenna 10b. This can be advantageous for performing a reflection measurement from the side of the second antenna 10b. Moreover, the other second antenna can be particularly advantageous when the second antenna 10b is configured either only for transmission or only for reception of electromagnetic waves. Therefore, the other antenna can provide the missing capability, hence allowing for a reflection measurement. In other words, the other second antenna and the second antenna 10b can be configured in a bistatic setup.

It will be understood that the system may comprise a plurality of first antennas 10a and a plurality of second antennas 10b.

In some embodiments, the radome measurement system can be configured to determine the property of the radome 15 further based on at least one reference. The at least one reference can allow compensating for effects caused on the measurement signal by elements external to the radome 15, such as, the environment, the air between the antennas, unwanted reflections and/or imperfections of the antennas and/or RF connections

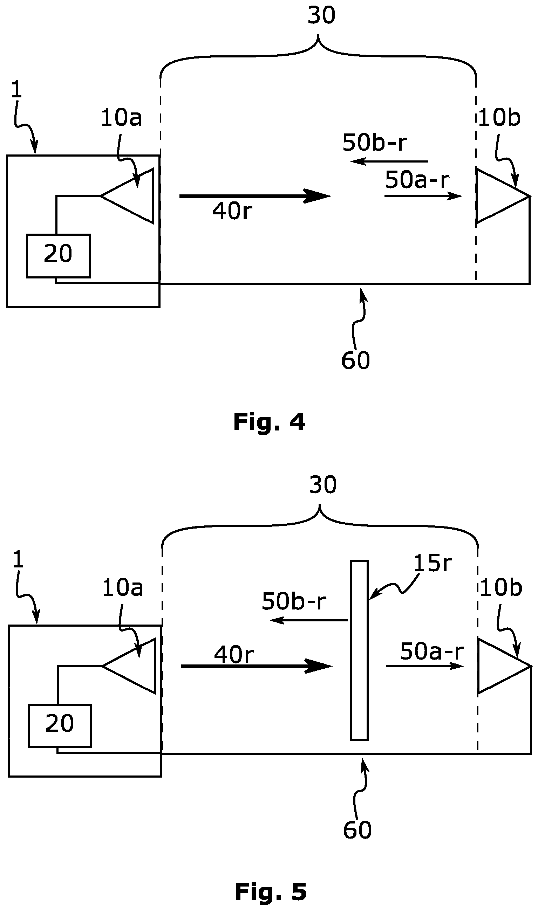

Fig. 4 and Fig. 5 depict the radome measuring system of the present invention configured to perform a reference measurement to obtain at least one reference. In Fig. 4, the system is illustrated performing a reference measurement with an empty measurement region 30, therefore obtaining an empty reference. In Fig. 5, the system is illustrated performing a reference measurement with a sample 15r with known properties placed in the measurement region 30, therefore obtaining a sampled reference.

The principle of performing the reference measurement can be similar to the one for performing a radome measurement illustrated in Fig. 1. At least one of the antennas 10a, 10b can emit a reference measurement signal 40r. Figs. 4 and 5 illustrate the case when the first antenna 10a transmits the reference measurement signal 40r.

The other antenna 10a, 10b receives a reference transmitted portion 50a-r of the reference measurement signal 40r. Figs. 4 and 5 illustrate the case when the second antenna 10b receives the reference transmitted portion 50a-r. In Fig. 4, the reference transmitted portion 50a-r traverses only through the measurement region 30, while in Fig. 5 the reference transmitted portion 50a-r traverses through the measurement region 30 and the sample 15r provided therein.

Additionally, the reference reflected portion 50b-r can be created and received by the antennas 10a, 10b. In Fig. 4 the reference reflected portion 50b-r can be created environment surfaces, such as, by the antennas 10a, 10b. In Fig. 5, the reference reflected portion 50b-r are additionally created by the sample 15r.

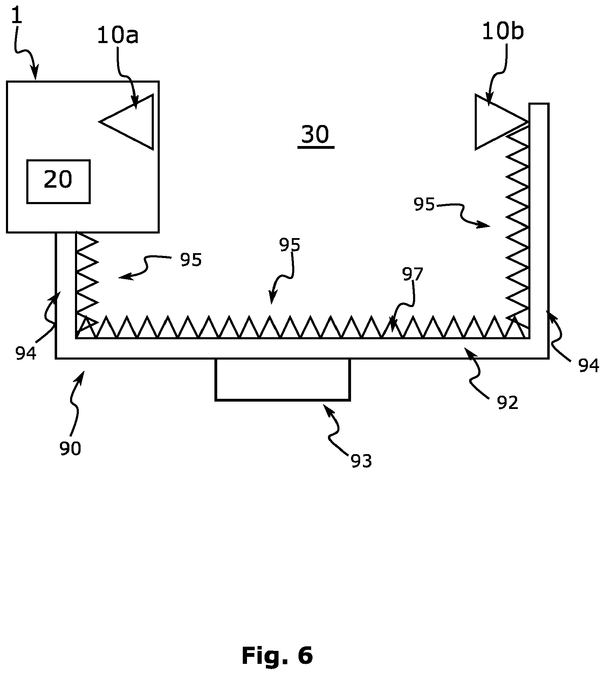

Fig. 6 depicts a further embodiment of the radome measuring system wherein the position relative to each other of the second antenna 10b and the radar unit 1 is fixed. This can be performed by the use of a frame 90.

The frame 90 can comprise a solid material. It can be configured to allow mounting therein the radar unit 1 and the second antenna 10b, such that, the first antenna 10a and the second antenna 10b can face each other. For example, the frame 90 can comprise a U-shaped structure as illustrated in Fig. 6.

More particularly, the frame 90 can comprise a main frame portion 92 and two sidearms 94 protruding from the same side of the main frame portion 92. On or in one of the sidearms 94 the radar unit 1 can be provided. On or in the other sidearm 94 the second antenna 10b can be provided.

The frame 90 can comprise a handle 93. The handle 93 can be configured to allowing handling of the radome measurement system, particularly by a user. For example, the handle 93 can be a handgrip. In some embodiments, the frame 90 itself can be configured to allow handling of the radome measurement system, e.g., by having a main frame portion 92 with a circumference which allows gripping.

In an inner surface which abuts the measurement region 30 the frame 90 can comprise a radiation-absorbent coating 95. The radiation-absorbent coating 95 can comprise a radiation-absorbent material. Moreover, the radiation-absorbent coating 95 can comprise arrays of protrusion pieces 97, which can be pyramid shaped. The radiation-absorbent coating 95 can minimize unwanted reflection generated by the frame 90.

It will be understood that Fig. 6 is not up-to-scale. The radar unit 1 and the second antenna 10b can be fully integrated into the frame 90. For example, the radar unit and the second antenna 10b can be provided inside the frame 90, preferably inside respective side arms protruding from the main frame portion 92.

Therefore, in some embodiments the radome measurement system can be configured as a portable radome measuring device, as illustrated in Fig. 6.

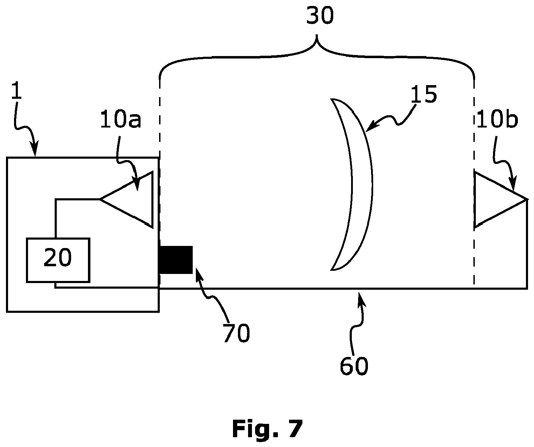

Fig. 7 illustrates a further embodiment of the radome measuring system. It will be understood, that the embodiment illustrated in Fig. 7 can be combined with any of the preceding embodiments of the radome measuring system.

In some embodiments, the radome measuring system can further comprise at least one distance sensor 70. The at least one distance sensor 70 can be configured to measure a distance. Preferably, the at least one distance sensor 70 can be a laser-based distance sensor 70. The latter can provide particularly accurate distance measurements.

The at least one distance sensor 70 can provided on either side of the measurement region 30. As illustrated in Fig. 7, the at least one distance sensor 70 can be provided on the same side of the measurement region 30 as the first antenna 10a. For example, the distance sensor 70 can be attached (e.g., glued) on the radar unit 1 such that the at least one distance sensor 70 faces the measurement region 30. Alternatively or additionally, the at least one distance sensor 60 can be provided on the same side of the measurement region 30 as the second antenna 10b. For example, referring to the embodiment in Fig. 6, the at least one distance sensor 70 can be attached on either or both of the sidearms of the frame 90 such that the at least one distance sensor 70 can measure a distance in the direction towards the measurement region.

In some embodiments, the at least one distance sensor 70 can be connected for data communication with the radar unit 1, preferably with the data processing device 20 of the radar unit 1. This allows the output of the distance sensor 70 to be received by the data processing device 20.

In some embodiments, the at least one distance sensor 70 can be connected for data communication with an output device (not shown) such as a display 810. The output device can output, e.g., can display, the measurements of the distance sensor 70. The system can comprise the output device.

The at least one distance sensor 70 can be utilized to measure a distance to the radome 15 placed in the measurement region. This can allow determining a distance between the antennas 10a, 10b and the radome 15. Moreover, it can allow determining whether the radome 15 is placed in a target position in the measurement region. For example, it can be determined whether a target distance between the radome 15 and the antennas 10a, 10b is maintained.

In some embodiments, the system can comprise one distance sensor 70. In such embodiments, only the distance to the radome 15 can be determined.

In some embodiments, the system can comprise multiple distance sensors 70. For example, the system can comprise an array of distance sensors 70. In such embodiments, in addition to the distance to the radome 15 (i.e., the position of the radome within the measurement region 30) the tilt of the radome 15 can be determined. The skilled person will understand that using multiple distance sensors 70 the tilt of the radome 15 can be determined using trigonometrical and geometrical identities.

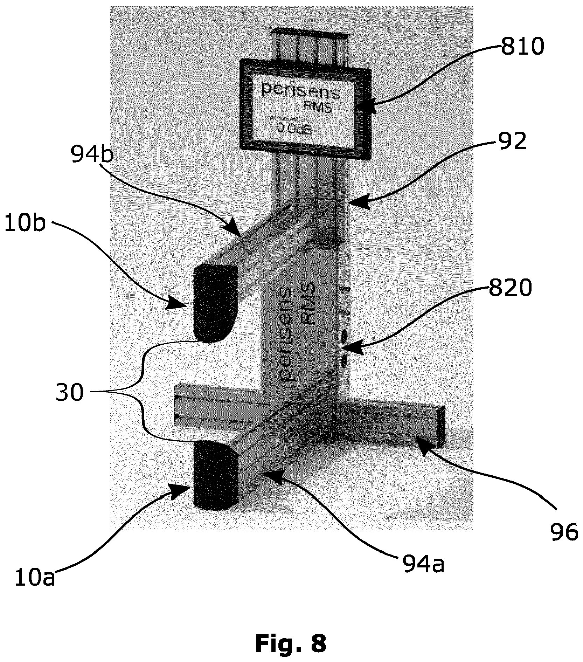

Fig. 8 depicts another embodiment of the radome measurement system. In this embodiment, both the first antenna 10a and the second antenna 10b are provided as external antennas, i.e., not embedded in the radar unit 1.

The radome measuring system of Fig. 8 comprises can a data processing device 20, which can be enclosed by the enclosure 820. The data processing device 20 can be comprised by a radar unit 1. The system can further comprise a first antenna 10a and a second antenna 10b configured to be connected with the data processing device 20 and to face each other on opposite sides of a measurement region 30.

The data processing device can be configured to control the antennas 10a, 10b to transmit a measurement signal 40 through the measurement region 30 and to receive at least one received portion 50a, 50b of the measurement signal 40 and to determine a property of a radome 15 placed in the measurement region 30 based on the at least one received portion 50a, 50b of the measurement signal 40.

The system can further comprise a main frame portion 92, which can also be referred to as a main frame 92. A first arm 94a (which can also be referred to as a first sidearm 94a) and a second arm 94b (which can also be referred to as a first sidearm 94b) can be attached on the same side of the main frame. The first antenna 10a can be mounted on the first arm 94a and the second antenna 10b can be mounted on the second arm 94b.

The enclosure 820 can be mounted on the main frame 92 on the space between the arms 94.

The system can further comprise a display 810, which can be mounted on the main frame portion 92.

The system can further comprise a supporting frame portion 96, which can also be referred to as a supporting frame 96. The supporting frame portion 96 can increase the stability of the radome measuring system while standing on a surface.

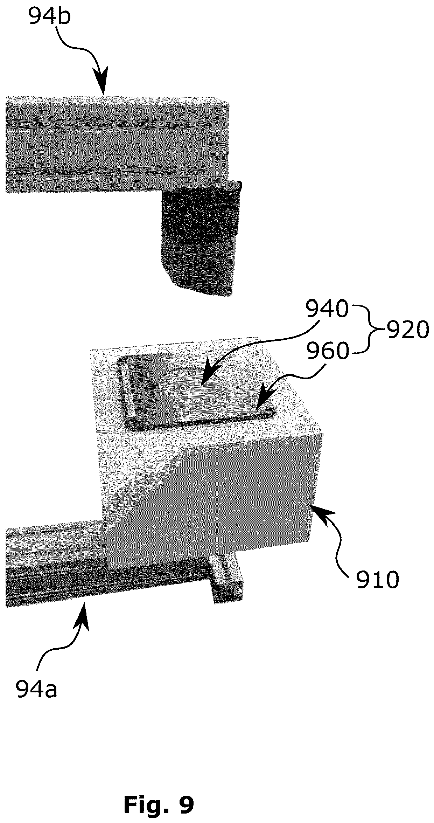

Fig. 9 depicts an embodiment of the radome measurement system further comprising a radome supporting element 910 and a focusing element 920, wherein the focusing element 920 can comprise an aperture portion 940 and a blocking portion 960.

It will be understood that the radome supporting element 910 and the focusing element 920 can be independent features.

It will be understood that the terms "radome measurement system" and "radome measuring system" are used interchangeably. Similarly, the terms the terms "radome measurement method" and "radome measuring method" are used interchangeably.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

While in the above, preferred embodiments have been described with reference to the accompanying drawings, the skilled person will understand that these embodiments were provided for illustrative purpose only and should by no means be construed to limit the scope of the present invention, which is defined by the claims.

## Claims

1. A radome measuring system, comprising:
a data processing device (20);
a first antenna (10a) and a second antenna (10b) configured to be connected with the data processing device (20) and to face each other on opposite sides of a measurement region (30); and
at least one antenna channel (60), each configured to connect the data processing device (20) with one of the antennas (10a, 10b);
wherein the data processing device (20) is configured
to control the antennas (10a, 10b) to transmit a measurement signal (40) through the measurement region (30) and to receive at least one received portion (50a, 50b) of the measurement signal (40) and
to determine a property of a radome (15) placed in the measurement region (30) based on the at least one received portion (50a, 50b) of the measurement signal (40).

2. The radome measuring system according to the preceding claim, wherein the system comprises a radar unit (1) and wherein the radar unit (1) comprises the data processing device (20).

3. The radome measuring system according to the preceding claim, wherein the radar unit (1) and the first antenna (10a) are configured to be operable as a monostatic radar.

4. The radome measuring system according to any of the 2 preceding claims, wherein the system comprises a plurality of first antennas (10a) and the radar unit (1) and the plurality of the first antennas (10a) are configured to be operable as a bistatic or multistatic radar.

5. The radome measuring system according to any of the preceding claims, wherein each of the antenna channels (60) is configured to convey microwave-frequency signals, the microwave frequencies preferably having a frequency between 30 GHz to 160 GHz and more preferably between 70 GHz to 90 GHz.

6. The radome measuring system according to claims 2 and 5, wherein each antenna channel (60) is embedded at least in part in the radar unit (1).

7. The radome measuring system according to any of the preceding claims, wherein the system further comprises at least one distance sensor (70) configured to measure a distance between the distance sensors (70) and the radome (15) placed in the measurement region (30).

8. The radome measuring system according to the preceding claim, wherein the system comprises a plurality of distance sensors (70) and wherein the data processing device (20) is configured to determine a tilt of the radome (15) based on the output of the distance sensors (70).

9. The radome measuring system according to any of the 2 preceding claims,
wherein the at least one distance sensor (70) is a laser-based distance sensor (70),
wherein the at least one laser-based distance sensor (70) is configured to emit visible light to measure the distance and
wherein the at least one laser-based distance sensor (70) that is configured to emit visible light, is further configured such that the emitted visible light when incident on the radome (15) placed in the measurement region (30) indicates a measurement area of the radome (15) whereon the measurement signal (40) is incident.

10. The radome measuring system according to any of the preceding claims, further comprising
a main frame portion (92);
a first arm (94a) configured to allow mounting at least one antenna (10a, 10b) thereon and a second arm (94b) configured to allow mounting at least one antenna (10a, 10b) thereon,
such that the at least one antenna (10a, 10b) mounted on the first arm (94a) faces the at least one antenna (10a, 10b) mounted on the second arm (94b);
wherein the first arm (94a) and the second arm (94b) are attached to the main frame portion (92) such that they protrude from the same side of the main frame portion (92);
wherein the first antenna (10a) is mounted on the first arm (94a) and the second antenna (10b) is mounted on the second arm (94b).

11. The radome measuring system according to any of the preceding claims, further comprising a display (810) and wherein the display (810) is configured to display at least one output of the data processing device (20).

12. A radome measuring system according to any of the preceding claims, further comprising a radome supporting element (910) configured to support the radome (15) during a measurement, wherein the radome supporting element (910) is configured to facilitate positioning and holding the radome (15) in the measurement region (30).

13. The radome measuring system according to any of the preceding claims, further comprising a focusing element (920) and wherein the focusing element (920) comprises a blocking portion (960) and an aperture portion (940), wherein the aperture portion (940) comprises a different material than the blocking portion (960).

14. The radome measuring system according to any of the preceding claims, wherein the radome measuring system is configured to be handled manually.

15. A method comprising
providing the radome measuring system according to any of the preceding claims;
the data processing device (20) controlling the antennas (10a, 10b) thereby transmitting a measurement signal (40) through the measurement region (30) and receiving at least one received portion (50a, 50b) of the measurement signal (40);
a processing subsystem determining a property of a radome (15) placed in the measurement region (30) based on the at least one received portion (50a, 50b) of the measurement signal (40).
